(19) 

Europäisches
Patentamt
European
Patent Office
Office européen
des brevets

(11) **EP 4 458 168 A1**

(12) # EUROPEAN PATENT APPLICATION
published in accordance with Art. 153(4) EPC

(43) Date of publication:
**06.11.2024 Bulletin 2024/45**

(21) Application number: **22916180.7**

(22) Date of filing: **28.12.2022**

(51) International Patent Classification (IPC):
**A23L 27/00** (2016.01)          **A23L 27/10** (2016.01)
**A23L 27/30** (2016.01)

(52) Cooperative Patent Classification (CPC):
**A23L 27/00; A23L 27/10; A23L 27/30**

(86) International application number:
**PCT/JP2022/048632**

(87) International publication number:
**WO 2023/127958 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021215257**

(71) Applicant: **Suntory Holdings Limited
Osaka 530-8203 (JP)**

(72) Inventors:
• **YAMASHITA, Jumpei
Kawasaki-shi, Kanagawa 211-0067 (JP)**

• **OHKURI, Tadahiro
Kawasaki-shi, Kanagawa 211-0067 (JP)**
• **TERAMOTO, Yuki
Kawasaki-shi, Kanagawa 211-0067 (JP)**
• **NAGAO, Koji
Kawasaki-shi, Kanagawa 211-0067 (JP)**
• **YOKOO, Yoshiaki
Kawasaki-shi, Kanagawa 211-0067 (JP)**
• **FUJIE, Akiko
Kawasaki-shi, Kanagawa 211-0067 (JP)**

(74) Representative: **Mewburn Ellis LLP
Aurora Building
Counterslip
Bristol BS1 6BX (GB)**

(54) ## ORAL COMPOSITION HAVING INCREASED SWEETNESS

(57)      [Problem] To develop a method that is capable of further enhancing the sweetness of a sweetener. [Solution] Provided is a composition for oral use comprising: (a) a high-sweetness sweetener in an amount equivalent to a sweetness intensity X1; and (b) a capsaicinoid or Capsicum extract in an amount less than a taste recognition threshold. The components (a) and (b) exhibit sweetness of sweetness intensity X2, and satisfy $0.1 < X1 < X2$.

EP 4 458 168 A1

**Description**

Technical Field

The present invention relates to an oral composition having an increased sweetness, a method for producing the oral composition, a method for enhancing the sweetness of an oral composition, a concentrate for providing an oral composition, and the like.

Background Art

Human beings have five types of sensory organs, and a taste sense is one of the sensory organs of human beings. The taste receptor organ that receives a tastant is called a taste bud and is present in a wide range centered on the lingual tip, and in circumvallate and foliate papillae, which are present in a limited range in the back of the lingua. The taste bud is a cell aggregate including cells that are called taste cells and have an elongated shape, and basal cells. Taste cells extend microvilli toward the surface of the tongue and form synapses with taste nerve fibers entering taste buds at the bottom of the cells. A taste that we usually feel is transmitted as taste information to the brain via the taste nerve and recognized. T1R2 and T1R3 are known as sweet taste receptors. It has been reported that T1R2 and T1R3 form heterodimers (Non-Patent Literatures 1 to 3).

Although various studies on taste have been conducted, it is a field in which many things have not yet been clarified. Although there are various tastes of foods that we usually experience, a food which seems to be delicious is one in which various tastes are appropriately mixed and well harmonized. The taste of a food may be perceived alone, but is often perceived as a mixed taste of various tastes, and the various tastes are related to each other.

On the other hand, in recent years, foods have been required to have low calories in addition to a good taste. This is related to the fact that adult diseases such as obesity and diabetes are regarded as problems. However, for obtaining a low-calorie food, it is necessary to suppress a sugar concentration of the food to a low level, which is an obstacle in providing a food having a low-calorie content and a good taste. To overcome such an obstacle, attempts have been made to increase sweetness by a sweetener (Patent Literatures 1 to 11).

Citation List

Patent Literature

Patent Literature 1: WO 2018/225817
Patent Literature 2: WO 2020/116624
Patent Literature 3: WO 2020/116626
Patent Literature 4: WO 2020/116627
Patent Literature 5: WO 2020/116628
Patent Literature 6: WO 2020/116633
Patent Literature 7: WO 2020/116634
Patent Literature 8: WO 2020/116637
Patent Literature 9: WO 2020/116638
Patent Literature 10: WO 2020/116639
Patent Literature 11: WO 2020/116641

Non-Patent Literature

Non-Patent Literature 1: Zhao G. Q., Zhang Y., Hoon M.A., Chandrashekar J., Erlenbach I., Ryba N. J. P., and Zuker1 C. S., Cell, 2003, Vol. 115, 255-266
Non-Patent Literature 2: Li X, Staszewski L, Xu H, Durick K, Zoller M, Adler E., Proc Natl Acad Sci U S A. 2002, 99(7), 4692-4696.
Non-Patent Literature 3: Fernstrom J. D., Munger S. D., Sclafani A., de Araujo I. E., Roberts A., and Molinary S., J. Nutr. 2012. Vol. 142: 1134S-1141S.

Summary of Invention

Technical Problem

Under the circumstances described above, development of a further method capable of enhancing a sweetness of a sweetener has been awaited.

Solution to Problem

The present inventors have succeeded for the first time in increasing a sweetness of a sweetener by adding a low concentration of capsaicin to an oral composition containing a sweetener.

That is, the present invention includes inventions of the following aspects.

[1] An oral composition comprising:

(a) a high-intensity sweetener in an amount corresponding to a sweetness intensity of X1; and
(b) a capsaicinoid or capsicum extract at less than a taste recognition threshold, wherein
the components (a) and (b) exhibit a sweetness having a sweetness intensity of X2, and $0.1 < X1 < X2$ is satisfied.

[2] The oral composition according to [1], further comprising (c) sodium at from 0.5 mM to 160 mM, wherein the components (a) to (c) exhibit a sweetness having a sweetness intensity of X3, and $0.1 < X1 < X2 < X3$ is satisfied.
[3] The oral composition according to [1] or [2], wherein the high-intensity sweetener includes a high-intensity sweetener selected from rebaudioside A, rebaudioside D, rebaudioside M, mogroside V, luo han guo extract, sucralose, acesulfame K, and combinations thereof.
[4] The oral composition according to any one of [1] to [3], wherein the capsaicinoid includes a capsaicinoid selected from capsaicin, dihydrocapsaicin, nordihydrocapsaicin, homocapsaicin, homodihydrocapsaicin, and combinations thereof.
[5] The oral composition according to any one of [1] to [4], further comprising a low-intensity sweetener.
[6] The oral composition according to [5], wherein the low-intensity sweetener includes a low-intensity sweetener selected from glucose, sucrose, fructose, maltose, isomerized sugar, lactose, psicose, allose, tagatose, xylose, ribose, and combinations thereof.
[7] The oral composition according to any one of [1] to [6], the oral composition is a beverage.
[8] A concentrate of the oral composition according to any one of [1] to [7], the concentrate comprising:

(a) a high-intensity sweetener in an amount corresponding to a sweetness intensity of $X1 \times n$; and
(b) a capsaicinoid or capsicum extract at less than n times a taste recognition threshold, wherein
the components (a) and (b) exhibit a sweetness having a sweetness intensity of $X2 \times n$, $0.1 < X1 < X2$ is satisfied, and n is from 2 to 20.

[9] The concentrate of the oral composition according to [2], the concentrate further comprising (c) sodium at from $0.5 \times n$ mM to $160 \times n$ mM, wherein the components (a) to (c) exhibit a sweetness having a sweetness intensity of $X3 \times n$, and $0.1 < X1 < X2 < X3$ is satisfied.
[10] A method for producing the oral composition according to any one of [1] to [7], the method comprising:

(a) adding a high-intensity sweetener, as a raw material, in an amount corresponding to a sweetness intensity of X1; and
(b) adding a capsaicinoid or capsicum extract as a raw material, at less than a taste recognition threshold.

[11] The method according to [10], further comprising,
(c) adding from 0.5 mM to 160 mM of sodium as a raw material.
[12] A method for enhancing a sweetness of an oral composition, the sweetness being imparted by a high-intensity sweetener, the method comprising, in production of the oral composition:

(a) adding the high-intensity sweetener, as a raw material, at a taste recognition threshold or more; and
(b) adding a capsaicinoid or capsicum extract, as a raw material, at less than the taste recognition threshold.

[13] The method according to [12], further comprising, in the production of the oral composition,
(c) adding from 0.5 mM to 160 mM of sodium, as a raw material.

[14] An oral composition comprising:

(a) a high-intensity sweetener at from about 20 to about 600 ppm; and
(b) capsaicinoid at from about 0.0009 to 0.3 ppm.

[15] The oral composition according to [14], further comprising (c) sodium at from 0.5 mM to 160 mM.

Description of Embodiments

The present invention will be described in detail below. The following embodiments are examples for explaining the present invention and are not intended to limit the present invention to these embodiments only. The present invention can be implemented in various embodiments as long as the gist of the present invention is not deviated.

Note that all literatures, patent application publications, patent publications, and other patent documents cited in the present specification are incorporated herein by reference. In addition, the present specification encompasses the contents described in the specification and drawings of Japanese Patent Application (JP 2021-215257) filed on December 28, 2021, which serves as a basis for claiming priority of the present application.

In the present specification, for example, the description that "the content of a component A is X mg/100 mL" in relation to a beverage means that "X mg of the component A is contained in 100 mL of the beverage". The specific weight of a beverage is approximately 1, and thus, "mg/100 g" can be equated with "mg/100 mL" in the beverage. In a case where it is not appropriate to represent the denominator of a unit by volume, such as a solid composition, the denominator is read as a mass (for example, "mg/100 mL" should be read as "mg/100 g"). In addition, for example, the description that "the content of a component B is Y ppm" in relation to a beverage means that "the component B is contained at Y ppm with respect to the total amount (100 mass%) of the beverage".

1. Oral composition with increased sweetness exhibited by high-intensity sweetener

The present invention provides, as a first aspect, an oral composition below (hereinafter, sometimes referred to as "the oral composition of the present invention").

An oral composition comprising:

(a) a high-intensity sweetener in an amount corresponding to a sweetness intensity of X1; and
(b) a capsaicinoid or capsicum extract at less than a taste recognition threshold, wherein
the components (a) and (b) exhibit a sweetness having a sweetness intensity of X2, and 0.1 < X1 < X2 is satisfied.

That is, in the oral composition of the present invention, the component exhibiting a sweetness is (a) the high-intensity sweetener in an amount corresponding to the sweetness intensity of X1, and the sweetness exhibited by the oral composition of the present invention should be the sweetness intensity of X1 in calculation. However, (b) the capsaicinoid or capsicum extract at less than the taste recognition threshold is present in the oral composition although in a low concentration, and thus, the sweetness exhibited by (a) the high-intensity sweetener in an amount corresponding to the sweetness intensity of X1 is increased to a sweetness intensity of X2 (here, 0.1 < X1 < X2 is satisfied). The present invention may comprise, in addition to these components (a) and (b), additional components such as sodium, a sweetener other than the component (a), an acidulant, a flavoring, a vitamin, dyes, an antioxidant, a preservative, a seasoning, an extract, a pH adjuster, and a quality stabilizer. An oral composition according to one aspect of the present invention does not contain, as a sweetener, a sweet component other than (a) the high-intensity sweetener in an amount corresponding to the sweetness intensity of X1. An oral composition according to another aspect of the present invention may contain, as a sweetener, a sweet component other than (a) the high-intensity sweetener in an amount corresponding to the sweetness intensity of X1.

[Oral composition]

As used herein, an "oral composition" is a generic term for a solid, a semi-solid, a semi-liquid, a liquid, and a mixture thereof, which are orally ingestible. The oral composition of the present invention encompasses a food, and the food encompasses a beverage. Examples of the oral composition of the present invention include a general food, a nutritional supplement, a health food, a functional food, an infant food, and a geriatric food.

The term "nutritional supplement" refers to a food that is enriched with a certain nutritional component. The term "health food" refers to a food considered healthy or good for health, and includes a nutritional supplement, a natural food, a diet food, and the like. The term "functional food" refers to a food for supplying a nutritional component that performs the regulatory function of the body, and is synonymous with a food for specified health use. The term "infant food" refers to a food for feeding to children up to about 6 years of age. The term "geriatric food" refers to a food that has been treated in such a manner that it is easy to digest and absorb as compared with an untreated food.

The form of the oral composition is not particularly limited and may be in various forms. Examples of such a form include a beverage, confectioneries, and a supplement. The beverage may be either an alcoholic beverage or a non-alcoholic beverage. Examples of the non-alcoholic beverage include, but are not limited to, non-alcoholic beers, malt beverages, lactobacillus beverages, cocoa, sports drinks, nutritional drinks, tea-based beverages, coffee beverages, carbonated beverages, functional beverages, fruit/vegetable-based beverages, lactic beverages, milk beverages, flavored waters, and soymilk beverages.

The term "coffee beverage" refers to a beverage product produced using a coffee component as a raw material. The type of the product is not particularly limited, and for example, the "coffee beverage" includes "coffee", "coffee beverage", "soft drink containing coffee", "carbonated beverage containing coffee", and "caffeine-less coffee" defined in "the Fair Competition Code regarding Labeling of Coffee Beverages and the Like" in Japan. Note that among beverages using a coffee component as a raw material, those having a milk solids content of 3.0 mass% or greater are sometimes treated as "milk beverages" under the "Fair Competition Rules on Labeling of Drinking Milk" in Japan.

The term "coffee component" (as used herein, sometimes referred to as an extract of roasted coffee beans) refers to a solution containing a component derived from coffee beans, and examples thereof include a coffee extraction liquid, that is, a solution obtained by extracting roasted and ground coffee beans with water, warm water, or the like. Another example of the coffee component is a solution obtained by adjusting a coffee extract, an instant coffee, or the like with water, warm water, or the like to an appropriate amount, the coffee extract obtained by concentrating a coffee extraction liquid, the instant coffee obtained by drying a coffee extraction liquid.

The type of coffee beans used in the coffee beverage is not particularly limited. Examples of cultivated tree species include Arabica species, Robusta species, and Liberica species, and examples of coffee varieties include Mocha, Brazil, Columbia, Guatemala, Blue Mountain, Kona, Mandelin, and Kilimanjaro. One type of coffee beans may be used, or a plurality of types may be blended to be used. The method for roasting roasted coffee beans is not particularly limited, and the roasting temperature and the roasting environment are also not particularly limited. An ordinary method can be employed, but the roasting degree L value of coffee beans is preferably from 18 to 24. Furthermore, there is no limitation on the extraction method from the roasted coffee beans, and examples thereof include a method of performing extraction using water or warm water (from 0 to 100°C) for 10 seconds to 30 minutes from a ground product obtained by grinding roasted coffee beans into coarse grinding, intermediate grinding, fine grinding, or the like. The extraction method may be a drip method, a siphon method, a boiling method, a jet method, or a continuous method.

A milk component such as milk, cow's milk, or a dairy product may be added to the coffee beverage. The coffee beverage of the present invention may be decaf or contain caffeine. The concentration of caffeine in a case of containing caffeine is not particularly limited, but is preferably from about 40 mg/100 mL to 100 mg/100 mL. The chlorogenic acid concentration of the coffee beverage of the present invention is not particularly limited, but is preferably from about 15 to 85 mg/100 mL.

The form of the coffee beverage is not limited, and may be, for example, a form of a beverage in which a concentrated coffee extract or an instant coffee is dissolved, or a form of a packaged coffee beverage in which the coffee beverage is enclosed and packaged in a container such as a can or a PET bottle.

The non-alcoholic beer as used herein means a carbonated beverage having a beer-like taste and is of a non-fermented, non-alcohol type, which is substantially free of alcohol. The non-alcoholic beer does not exclude beverages containing a trace amount of alcohol that is undetectable.

The tea-based beverage includes a processed product produced using raw leaves plucked from a tea tree (scientific name: Camellia sinensis) as a raw material. For example, green tea, powdered green tea, oolong tea, red tea, pu-erh tea, and the like can be exemplified. Alternatively, the tea-based beverage also includes a processed product produced by using a raw material collected from other than the tea tree, which is called herbal tea such as barley tea, Hydrangea macrophylla tea, bitter melon tea, coca tea, rooibos tea, silver vine tea, vine tea, Adlay tea, Citrus junos tea, honeybush tea, Citrus reticulata peel tea, Houttuynia cordata tea, Sasa veitchii tea, bamboo tea, herb tea, seaweed tea, Japanese apricot and seaweed tea, mate tea, buckwheat tea, habu tea, tian cha, Japanese basil tea, Siraitia grosvenorii tea, or shiitake mushroom tea.

Suitably, the tea-based beverage is a processed product produced using raw leaves plucked from a tea tree (scientific name: Camellia sinensis) as a raw material. The raw leaves that can be used in the present invention are not limited in variety, production area, cultivation method, tea stage, and the like as long as they are leaves of the tea tree. Examples of the variety of the tea tree include Yabukita, Yutakamidori, Okumidori, Sayamakaori, Kanayamidori, Saemidori, and Asatsuyu. Examples of the production area include Shizuoka, Kagoshima, Mie, Kumamoto, Fukuoka, Kyoto, Miyazaki, and Saitama. Examples of the cultivation method include open field, covering, and Gyokuro. Examples of the tea stage include the first tea, the second tea, the third tea, the fourth tea, winter spring and autumn tea, and stubble tea.

A tea beverage produced using leaves of a tea tree generally includes: a step of heating freshly picked raw leaves with steam and drying them to obtain crude tea; a step of firing and sorting the crude tea to obtain finished tea;

an extraction step of extracting the finished tea with warmed water or the like; a rough filtration step of removing extraction residues from the extraction liquid; a cooling step of cooling the extraction liquid; a filtration step of removing fine solid contents from the extraction liquid; a preparation step of adding water, a green tea extract, an antioxidant, a pH adjuster, and the like to the extraction liquid to obtain a preparation; and a sterilization step of sterilizing the preparation. The above steps are merely examples, and the present invention is not limited thereto. For example, the order of the steps may be changed, another step may be added, or a part of the steps may be omitted. For example, in a case where the tea beverage is a powdered tea beverage, the additional step may be a step of grinding the finished tea with a mortar or the like.

An oolong tea beverage can be produced by using semi-fermented tea leaves obtained by semi-fermenting raw leaves, a red tea beverage can be produced by using fermented tea leaves, and a black tea beverage such as pu-erh tea can be produced by using tea leaves obtained by fermenting non-fermented green tea leaves with microorganisms such as molds. As the variety of the tea tree used for the production thereof, general varieties can be used.

Tea leaves derived from leaves of a tea tree and tea leaves for herbal tea may be mixed and used.

The produced green tea, oolong tea, red tea, black tea, and the like can be used alone as a tea beverage, but can also be used as a mixed tea beverage by mixing them at an appropriate ratio. Further, a tea beverage can be obtained by adding an extraction liquid of grains, sweet herbs, or the like to the tea beverage produced from the tea leaf extraction liquid.

The tea-based beverage preferably contains polyphenol. The polyphenol includes a polyphenol derived from a raw material, such as tea leaves, leaves of herbal tea, grains, or sweet herbs, or a polyphenol added as a food additive as necessary. Examples thereof include anthocyanin, resveratrol, isoflavone, lignan, hesperidin, curcumin, catechin, tannin, proanthocyanin, rutin, chlorogenic acid, ellagic acid, coumarin, and procyanidin. The content of polyphenol is preferably from 200 to 600 ppm, and particularly preferably from 300 to 500 ppm with respect to the total amount (100 mass%) of the tea beverage. The polyphenol content can be measured by any commonly known method but preferably by the Folin-Denis method. Among polyphenols, the content of catechins is preferably from 200 to 600 ppm, and particularly preferably from 300 to 500 ppm, with respect to the total amount (100 mass%) of the tea beverage. The catechins are preferably catechin, epicatechin, gallocatechin, epigallocatechin, epigallocatechin gallate, gallocatechin gallate, epicatechin gallate, and catechin gallate. As a method for measuring catechins, high performance liquid chromatography is preferable.

In a case where the composition of the present invention is a tea-based beverage, it is preferably a red tea beverage or a sugar-free tea beverage. Examples of the sugar-free tea beverage include a green tea beverage, an oolong tea beverage, a barley tea beverages, a brown rice tea beverage, an Adlay tea beverage, and a sugar-free red tea beverage. The coffee beverage may be either packaged coffee or liquid coffee.

The carbonated beverage is a beverage that contains carbonic acid gas. Examples of the carbonic acid gas include carbonic acid gas separately injected into the beverage and carbonic acid gas generated by fermentation of a part of raw materials. Examples of the carbonated beverage include, but are not limited to, a soft drink, a non-alcoholic beverage, and an alcoholic beverage. Specific examples thereof include, but are not limited to, a sparkling beverage, cola, diet cola, a cola-flavored beverage, a transparent carbonated beverage, ginger ale, cider, a milk-containing carbonated beverage, a sugar-free carbonated beverage, a fruit juice-based carbonated beverage, a fruit juice-flavored carbonated beverage, and a carbonated water with a fruit juice flavor imparted.

The gas pressure of the carbonated beverage is not particularly limited, but may be from 2.2 to 4.0 $kgf/cm^2$, from 2.2 to 3.5 $kgf/cm^2$, from 2.2 to 3.3 $kgf/cm^2$, from 2.2 to 3.2 $kgf/cm^2$, from 2.3 to 4.0 $kgf/cm^2$, from 2.3 to 3.5 $kgf/cm^2$, from 2.3 to 3.2 $kgf/cm^2$, from 3.0 to 4.0 $kgf/cm^2$ or from 3.0 to 3.5 $kgf/cm^2$. The content of the gas in the carbonated beverage can be defined by the gas pressure. As used herein, the term "gas pressure" refers to the gas pressure of carbonic acid gas in the carbonated beverage in a container unless otherwise specified. The gas pressure can be measured by fixing a beverage having a liquid temperature of 20°C to a gas internal pressure meter, once opening a stopcock of the gas internal pressure meter to release the carbonic acid gas in a head space to the atmosphere, then closing the stopcock again, shaking the gas internal pressure meter, and reading a value when a pointer reaches a certain position. As used herein, unless otherwise specified, the gas pressure of the carbonated beverage is measured using this method.

A taste (flavor) of the carbonated beverage is not particularly limited, and can be adjusted to various flavors. For example, the carbonated beverage may be an orange-taste, lemon-taste, lime-taste, grape-taste, ginger ale-taste, energy drink-taste, blackcurrant-taste, or cola-taste beverage. The taste of the carbonated beverage can be adjusted by adding a component approved as a food additive such as fruit juice, an acidulant, a flavoring, a plant extract, a milk component, or another flavor, or a component that has been eaten for a long time and is generally recognized as safe even if it has not been approved. In one aspect, the carbonated beverage is not a beer-taste beverage. Furthermore, the carbonated beverage may be a jerry drink. The form of the carbonated beverage is not limited, and may be, for example, a form of a packaged carbonated beverage in which the carbonated beverage is enclosed and packaged in a container such as a can, a bottle, or a PET bottle.

The form of the carbonated beverage is preferably a cola-flavored beverage, a transparent carbonated beverage, a ginger ale, a fruit juice-based carbonated beverage, a milk-containing carbonated beverage, or a sugar-free carbonated beverage. The functional drink include a sports drink, an energy drink, a health support drink, and a pouched jerry drink.

Examples of the fruit/vegetable-based beverage include a 100% fruit juice beverage, a beverage containing fruit, a soft drink containing low fruit juice, a fruit beverage containing fruit particles, and a fruit flesh beverage. The milk-based beverage includes a lactobacillus beverage or a milk-containing soft drink. Specific examples of the fruit/vegetable beverage include the "fruit beverage" in the definition of "Fair Competition Rules for Labeling of Fruit Beverages and the like" enforced in 2018, and "fruit juice", "fruit mix juice", "fruit juice containing fruit particles", "fruit/vegetable mix juice", "fruit juice-containing beverage" and "fruit juice-containing jerry drink" in the definition of "Enforcement Regulation of Fair Competition Rules for Labeling of Fruit Beverages and the like" enforced in 2016. Note that the fruit/vegetable-based beverage according to the present invention also includes a beverage containing less than 10% of fruit juice, which is classified as "other beverages" according to the above-mentioned rule, as long as the beverage contains fruit juice or vegetable juice.

The fruit juice contained in the fruit/vegetable beverage of the present invention is not particularly limited, and examples thereof include one or more selected from an orange, a mandarin orange, a lemon, a grapefruit, a lime, a pineapple, a strawberry, a raspberry, a blueberry, a blackcurrant, a cranberry, a blueberry, a guava, a banana, an acerola, a papaya, a passion fruit, a mango, an apple, a grape, a peach, a Japanese apricot, a pear, an apricot, a prune, a melon, a kiwifruit, and a quince. For the fruit juice, a fruit juice, such as a straight fruit juice or a concentrated fruit juice, can be used regardless of the production method. The concentrated fruit juice may be one prepared by either a heat concentration method or a freeze concentration method.

The fruit juice proportion of the fruit/vegetable-based beverage according to an embodiment can be, depending on an embodiment, from 1 to 100%, from 5 to 100%, from 10 to 100%, from 15 to 100%, from 20 to 100%, from 25 to 100%, from 30 to 100%, from 35 to 100%, from 40 to 100%, from 45 to 100%, from 50 to 100%, from 55 to 100%, from 60 to 100%, from 65 to 100%, from 70 to 100%, from 1 to 95%, from 4 to 95%, from 5 to 95%, from 10 to 95%, from 15 to 95%, from 20 to 95%, from 25 to 95%, from 30 to 95%, from 35 to 95%, from 40 to 95%, from 45 to 95%, from 50 to 95%, from 55 to 95%, from 60 to 95%, from 65 to 95%, from 70 to 95%, from 1 to 90%, from 5 to 90%, from 10 to 90%, from 15 to 90%, from 20 to 90%, from 25 to 90%, from 30 to 90%, from 35 to 90%, from 40 to 90%, from 45 to 90%, from 50 to 90%, from 55 to 90%, from 60 to 90%, from 65 to 90%, from 70 to 90%, from 1 to 85%, from 5 to 85%, from 10 to 85%, from 15 to 85%, from 20 to 85%, from 25 to 85%, from 30 to 85%, from 35 to 85%, from 40 to 85%, from 45 to 85%, from 50 to 85%, from 55 to 85%, from 60 to 85%, from 65 to 85%, from 70 to 85%, from 1 to 80%, from 5 to 80%, from 10 to 80%, from 15 to 80%, from 20 to 80%, from 25 to 80%, from 30 to 80%, from 35 to 80%, from 40 to 80%, from 45 to 80%, from 50 to 80%, from 55 to 80%, from 60 to 80%, from 65 to 80%, from 70 to 80%, from 1 to 75%, from 5 to 75%, from 10 to 75%, from 15 to 75%, from 20 to 75%, from 25 to 75%, from 30 to 75%, from 35 to 75%, from 40 to 75%, from 45 to 75%, from 50 to 75%, from 55 to 75%, from 60 to 75%, from 65 to 75%, from 1 to 70%, from 5 to 70%, from 10 to 70%, from 15 to 70%, from 20 to 70%, from 25 to 70%, from 30 to 70%, from 35 to 70%, from 40 to 70%, from 45 to 70%, from 50 to 70%, from 55 to 70%, from 60 to 70%, from 1 to 65%, from 5 to 65%, from 10 to 65%, from 15 to 65%, from 20 to 65%, from 25 to 65%, from 30 to 65%, from 35 to 65%, from 40 to 65%, from 45 to 65%, from 50 to 65%, from 55 to 65%, from 1 to 60%, from 5 to 60%, from 10 to 60%, from 15 to 60%, from 20 to 60%, from 25 to 60%, from 30 to 60%, from 35 to 60%, from 40 to 60%, from 45 to 60%, from 50 to 60%, from 1 to 55%, from 5 to 55%, from 10 to 55%, from 15 to 55%, from 20 to 55%, from 25 to 55%, from 30 to 55%, from 35 to 55%, from 40 to 55%, from 45 to 55%, from 1 to 50%, from 5 to 50%, from 10 to 50%, from 15 to 50%, from 20 to 50%, from 25 to 50%, from 30 to 50%, from 35 to 50%, from 40 to 50%, from 1 to 45%, from 5 to 45%, from 10 to 45%, from 15 to 45%, from 20 to 45%, from 25 to 45%, from 30 to 45%, from 35 to 45%, from 1 to 40%, from 5 to 40%, from 10 to 40%, from 15 to 40%, from 20 to 40%, from 25 to 40%, from 30 to 40%, from 1 to 35%, from 5 to 35%, from 10 to 35%, from 15 to 35%, from 20 to 35%, from 25 to 35%, from 1 to 30%, from 5 to 30%, from 10 to 30%, from 15 to 30%, from 20 to 30%, from 1 to 25%, from 5 to 25%, from 10 to 25%, from 15 to 25%, from 1 to 20%, from 5 to 20%, from 10 to 20%, from 1 to 15%, or from 5 to 15%. In one aspect of the present invention, the fruit/vegetable-based beverage may have a fruit juice percentage of 1 to 100%, 4 to 95%, 5 to 80%, 5 to 50%, or 5 to 30%.

Note that in the present specification, the "fruit juice proportion" is a relative concentration when a straight fruit juice produced by squeezing a fruit is taken as 100%, and can be converted based on a standard (°Bx) for a sugar refractometer reading or a standard (%) for acidity shown in the JAS standards (Japanese agricultural standards for fruit beverages).

The values of the standards (unit: °Bx) for sugar refractometer readings of representative fruits are 11 for orange, 9 for Japanese mandarin, 9 for grapefruit, 11 for pineapple, 7 for cranberry, 8 for blueberry and guava, 23 for banana, 9 for papaya, 14 for passion fruit, 13 for mango, 10 for apple, 11 for grape, 8 for peach, 8 for Japanese pear, 11 for pear, 7 for apricot, 6 for Japanese plum, and 10 for melon and kiwi fruit. In addition, the standards (unit: %) for acidity of representative fruits are 4.5 for lemon, 6 for lime, 3.5 for Japanese apricot, and 3.5 for Citrus sphaerocarpa.

Specifically, the fruit juice proportion can be calculated by the following conversion equation from the concentration factor of the fruit juice calculated from the blending amount (g) of fruit juice to be blended in 100 mL of the fruit/vegetable beverage and the standard (°Bx) for the sugar refractometer reading or the standard (%) for acidity.

$$[\text{Fruit juice proportion (\%)}] = [\text{blending amount (g) of fruit juice}] \times [\text{concentration factor}]/100 \text{ mL} \times 100$$

For example, the JAS standard for orange juice is Bx 11°, and thus when 6.0 wt.% of a concentrated orange juice with a Bx 55° is blended in a beverage, the fruit juice proportion is 30%. When the fruit juice proportion of the fruit juice is converted based on a JAS standard sugar refractometer reading, the sugar refractometer readings of sugar, honey, and/or the like added to the fruit juice are excluded.

The form of the fruit/vegetable beverage is not limited, and may be, for example, a form of a beverage in which a concentrated fruit juice extract is dissolved, or a form of a packaged fruit/vegetable beverage in which the fruit/vegetable beverage is enclosed and packaged in a container such as a can or a PET bottle.

Flavored water is a beverage obtained by adding a flavoring, a fruit juice, an extract, or the like to water such as mineral water (including natural mineral water), and is a beverage having a waterlike appearance called near water. In general, flavored water is colorless and transparent like water but has a taste such as fruit, sweetness, and sourness. It has a refreshing taste in such a manner that it can be drunk in place of water, and has a property that it is as easy to drink as water or it is easier to drink than water.

The flavoring that can be contained in the flavored water is not particularly limited, and examples thereof include a fruit-based flavor, a citrus-based flavor, a mint-based flavor, a coffee flavor, a cocoa flavor, and a tea flavor (including a red tea flavor). Among them, examples of the fruit-based flavor include one or more selected from valencene that is a flavoring contained in an essential oil of an orange or the like, linalool that is a flavoring contained in an essential oil of plants such as rosewood, lavender, bergamot, and coriander, and nootkatones such as d-nootkatone having a grapefruit-like aroma.

The fruit juice that can be contained in the flavored water is not particularly limited, and examples thereof include one or more selected from an orange, a mandarin orange, a lemon, a grapefruit, a lime, a pineapple, a strawberry, a raspberry, a blueberry, a blackcurrant, a cranberry, a blueberry, a guava, a banana, an acerola, a papaya, a passion fruit, a mango, an apple, a grape, a peach, a Japanese apricot, a pear, an apricot, a prune, a melon, a kiwifruit, and a quince. For the fruit juice, a fruit juice, such as a straight fruit juice or a concentrated fruit juice, can be used regardless of the production method. The concentrated fruit juice may be one prepared by either a heat concentration method or a freeze concentration method. In a case where fruit juice is used, it is preferable to use transparent fruit juice that has been subjected to a transparent treatment in consideration of the influence on the liquid color of a beverage. The fruit juice may be subjected to a decoloring treatment. From the viewpoint of maintaining the liquid color as colorless and transparent and from the viewpoint of maintaining the liquid color as colorless and transparent during long-term storage, the content of the transparent fruit juice is preferably 5.0 mass% or less, more preferably 2.0 mass% or less, even more preferably 1.5 mass% or less, and still even more preferably 1.0 mass% or less, with respect to the total amount (100 mass%) of the flavored water.

The extract that can be contained in the flavored water is not particularly limited, and examples thereof include one or more extracts selected from an algae extract, a dried fish flake extract, a mushroom extract, a cereal extract, a tea extract, a vegetable extract, a fruit extract, an herb extract, a mesophyll extract, a legume extract, a seed and fruit extract, and a yeast extract.

The absorbance of the flavored water at 660 nm of wavelength is preferably 0.06 or less, more preferably 0.02 or less, and even more preferably 0.01 or less. The absorbance at 660 nm of wavelength serves as an indicator of transparency, and a flavored water having an absorbance of 0.06 or less can be said to be a transparent beverage. Note that the lower limit of the absorbance of the flavored water of the present invention at 660 nm of wavelength is 0.

In the present specification, the absorbance at 660 nm of wavelength can be measured using an UV-Vis spectrophotometer such as UV-1600, UV-1800, or UV-1850 (available from Shimadzu Corporation).

Further, a ΔE value of transmitted light of the flavored water may be 3.5 or less. A flavored water having a ΔE value of 3.5 or less of transmitted light can be said to be a colorless beverage. Note that the lower limit of the ΔE value of transmitted light of the flavored water of the present invention is 0.

In the present specification, the ΔE value of transmitted light is a value measured in accordance with JIS Z 8722, and can be measured using a UV-Vis spectrophotometer such as ZE2000 (available from Nippon Denshoku Industries Co., Ltd.).

The flavored water of the present invention may be a carbonated beverage, a non-carbonated beverage, or a jerry drink. The carbonic acid gas pressure at 20°C of the flavored water as a carbonated beverage can be from 1.0 to 5.0 kgf/cm$^2$, from 1.0 to 4.5 kgf/cm$^2$, from 1.0 to 4.0 kgf/cm$^2$, from 1.0 to 3.5 kgf/cm$^2$, from 1.0 to 3.0 kgf/cm$^2$, from 1.0 to 2.5 kgf/cm$^2$, from 1.0 to 2.0 kgf/cm$^2$, from 1.2 to 5.0 kgf/cm$^2$, from 1.2 to 4.5 kgf/cm$^2$, from 1.2 to 4.0 kgf/cm$^2$, from 1.2 to 3.5 kgf/cm$^2$, from 1.2 to 3.0 kgf/cm$^2$, from 1.2 to 2.5 kgf/cm$^2$, from 1.2 to 2.0 kgf/cm$^2$, from 1.5 to 5.0 kgf/cm$^2$, from

1.5 to 4.5 kgf/cm$^2$, from 1.5 to 4.0 kgf/cm$^2$, from 1.5 to 3.5 kgf/cm$^2$, from 1.5 to 3.0 kgf/cm$^2$, or from 1.5 to 2.5 kgf/cm$^2$. The carbonic acid gas pressure at 20°C of the non-carbonated flavored water can be less than 1.0 kgf/cm$^2$, from 0 to 0.9 kgf/cm$^2$, from 0 to 0.8 kgf/cm$^2$, from 0 to 0.7 kgf/cm$^2$, from 0 to 0.6 kgf/cm$^2$, from 0 to 0.5 kgf/cm$^2$, from 0 to 0.4 kgf/cm$^2$, from 0 to 0.3 kgf/cm$^2$, from 0.1 to 0.9 kgf/cm$^2$, from 0.1 to 0.8 kgf/cm$^2$, from 0.1 to 0.7 kgf/cm$^2$, from 0.1 to 0.6 kgf/cm$^2$, from 0.1 to 0.5 kgf/cm$^2$, from 0.1 to 0.4 kgf/cm$^2$, from 0.1 to 0.3 kgf/cm$^2$, from 0.2 to 0.9 kgf/cm$^2$, from 0.2 to 0.8 kgf/cm$^2$, from 0.2 to 0.7 kgf/cm$^2$, from 0.2 to 0.6 kgf/cm$^2$, from 0.2 to 0.5 kgf/cm$^2$, from 0.2 to 0.4 kgf/cm$^2$, or from 0.2 to 0.3 kgf/cm$^2$.

Note that in the present specification, the carbonic acid gas pressure can be measured using a gas volume analyzer such as GVA-500A available from Kyoto Electronics Manufacturing Co., Ltd. For example, the temperature of a sample is set to 20°C, and the sample is subjected to degassing (snifting) and shaking in the air in the container in the gas volume analyzer. Subsequently, the carbonic acid gas pressure can be measured.

The alcoholic beverage refers to a beverage containing an alcohol raw material. The alcoholic beverage may be white liquor high-ball. Examples of the alcohol raw material include brewed liquor, distilled liquor, and mixed liquor. Examples of the brewed liquor include wine and beer. Examples of the distilled liquor include spirits (e.g., gin, vodka, rum, tequila, new spirits, and alcohol as raw material), liqueurs, whiskeys (e.g., whisky and brandy), and white liquor. Here, the alcoholic beverage only needs to contain a detectable amount of alcohol, and contains, for example, 1 vol.% or more, 2 vol.% or more, 3 vol.% or more, 4 vol.% or more, or 5 vol.% or more of alcohol. The alcoholic beverage may be, for example, one obtained by adding alcohol to the above-described fruit/vegetable-based beverage, flavored water, carbonated beverage, or the like. The alcohol content is expressed as a percentage on a volume/volume basis (v/v%), and the alcohol content of the beverage can be measured by any known method, such as measurement by a vibratory densitometer.

Examples of the processed foods include processed foods of cereals, seafood, and meat (bread, noodle, tortilla, pasta, ham, bacon, sausage, fish sausage, fried fish sausage, minced flesh, and the like).

Examples of the confectioneries include, but are not limited to, a candy, a jam, a chewing gum, ice cream, a snack, a cookie, a biscuit, a cake, a wafer, confectionary bread, chocolate, and Japanese confectionery.

The oral composition of the present invention may also be in the form of pharmaceuticals or quasi-pharmaceuticals such as a fine granule, a tablet, a granule, powder, a capsule (including a soft capsule and a hard capsule), a chewable tablet, syrup, mouthwash, toothpaste, oral ointment, mouthwash, and throat spray, or in the form of processed foods such as natural liquid foods, semi-liquid foods, semi-solid foods, semi-digestive nutritional foods, and elemental diet foods, drinks, and enteral nutrients in which the composition of the present invention is blended in proteins, sugars, fats, trace elements, vitamins, emulsifiers, and flavorings. Accordingly, the present invention also provides an oral product such as a pharmaceutical product, a quasi-drug, a natural liquid food, a semi-digestible nutritional food, an elemental diet food, a drink, or an enteral nutrient, which comprises the components (a) and (b), in which the amount of the component (b) is less than the taste recognition threshold. The term "oral product" is a generic term for substances that are introduced into the mouth regardless of ingestion.

Furthermore, the oral composition of the present invention may be packaged and sterilized.

[Sweetness intensity]

As used herein, the term "sweetness intensity" refers to the intensity of sweetness exhibited by a substance. For example, in a case where the sweetness intensity exhibited by sucrose per unit concentration Brix 1 is defined as a sweetness degree of 1, the sweetness degree of glucose is from 0.6 to 0.7 (central value: 0.65). The numerical value obtained by multiplying the sweetness degree by the concentration Brix value of glucose is the sweetness intensity of glucose. Thus, in a case where the glucose concentration is a Brix of 1.5, the sweetness intensity of glucose is 0.65 × 1.5 = 0.975.

[Table 1]

Table 1

| Sugar (D-form) | Sweetness |
|---|---|
| Sucrose | 1 |
| Glucose | from 0.6 to 0.7 |
| Fructose | from 1.3 to 1.7 |

(continued)

| Maltose | 0.4 |
| Fructooligosaccharide | 0.6 |
| Maltooligosaccharide | 0.3 |
| Isomaltooligosaccharide | from 0.4 to 0.5 |
| Galactooligosaccharide | 0.7 |
| Isomerized sugar | from 0.8 to 0.9 |
| Lactose | from 0.2 to 0.3 |
| Psicose | 0.7 |
| Allose | 0.8 |
| Tagatose | 0.9 |

The oral composition of the present invention contains a high-intensity sweetener in an amount corresponding to the sweetness intensity of X1 as described above, and exhibits a sweetness of the sweetness intensity of X2 due to the components (a) and (b), and $0.1 < X1 < X2$ is satisfied. In a case where the high-intensity sweetener of the component (a) includes a combination of a plurality of sweet substances, an amount of high-intensity sweetener in the component (a) is the combined amount of all the sweet substances.

X1 of "sweetness intensity of X1" may be more than 0.1 and 0.5 or less, more than 0.1 and 1.0 or less, more than 0.1 to 1.5 or less, more than 0.1 to 2.0 or less, more than 0.1 to 2.5 or less, more than 0.1 to 3.0 or less, more than 0.1 to 3.5 or less, more than 0.1 to 4.0 or less, more than 0.1 to 4.5 or less, more than 0.1 to 5.0 or less, more than 0.1 to 5.5 or less, from 0.5 to 1.0, from 0.5 to 1.5, from 0.5 to 2.0, from 0.5 to 2.5, from 0.5 to 3.0, from 0.5 to 3.5, from 0.5 to 4.0, from 0.5 to 4.5, from 0.5 to 5.0, from 0.5 to 5.5, from 1.0 to 1.5, from 1.0 to 2.0, from 1.0 to 2.5, from 1.0 to 3.0, from 1.0 to 3.5, from 1.0 to 4.0, from 1.0 to 4.5, from 1.0 to 5.0, from 1.0 to 5.5, from 1.5 to 2.0, from 1.5 to 2.5, from 1.5 to 3.0, from 1.5 to 3.5, from 1.5 to 4.0, from 1.5 to 4.5, from 1.5 to 5.0, from 1.5 to 5.5, from 2.0 to 2.5, from 2.0 to 3.0, from 2.0 to 3.5, from 2.0 to 4.0, from 2.0 to 4.5, from 2.0 to 5.0, from 2.0 to 5.5, from 2.5 to 3.0, from 2.5 to 3.5, from 2.5 to 4.0, from 2.5 to 4.5, from 2.5 to 5.0, from 2.5 to 5.5, from 3.0 to 3.5, from 3.0 to 4.0, from 3.0 to 4.5, from 3.0 to 5.0, from 3.0 to 5.5, from 2.0 to 6.5, from 2.0 to 7.0, from 2.0 to 7.5, from 2.0 to 6.0, from 2.5 to 7.0, from 2.5 to 7.5, from 2.5 to 6.0, from 2.5 to 6.5, from 3.0 to 6.0, from 3.0 to 6.5, from 3.0 to 7.0, from 3.0 to 7.5, from 3.0 to 8.0, from 3.0 to 8.5, from 3.0 to 9.0, from 3.0 to 9.5, from 3.5 to 7.0, from 3.5 to 7.5, from 3.5 to 8.0, from 4.5 to 8.5, from 3.5 to 9.0, from 3.5 to 9.5, from 4.0 to 7.5, from 4.0 to 8.0, from 4.0 to 8.5, from 4.0 to 9.0, from 4.0 to 9.5, from 3.5 to 8.5, from 3.5 to 10.0, from 3.5 to 10.5, from 3.5 to 11.0, from 3.5 to 11.5, or from 4.0 to 11.5.

X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, from 0.5 to 6.0, from 0.5 to 6.5, from 0.5 to 7.0, from 0.5 to 7.5, from 0.5 to 8.0, from 0.5 to 8.5, from 0.5 to 9.0, from 0.5 to 9.5, from 0.5 to 10.0, from 0.5 to 10.5, from 0.5 to 11.0, from 0.5 to 11.5, from 0.5 to 12.0. from 0.5 to 13.0, from 0.5 to 14.0, from 0.5 to 15.0, from 0.5 to 16.0, from 0.5 to 17.0, from 0.5 to 18.0, from 1.0 to 6.0, from 1.0 to 6.5, from 1.0 to 7.0, from 1.0 to 7.5. from 1.0 to 8.0, from 1.0 to 8.5, from 1.0 to 9.0, from 1.0 to 9.5, from 1.0 to 10.0, from 1.0 to 10.5, from 1.0 to 11.0, from 1.0 to 11.5, from 1.0 to 12.0, from 1.0 to 13.0, from 1.0 to 14.0, from 1.0 to 15.0, from 1.0 to 16.0, from 1.0 to 17.0, from 1.0 to 18.0, from 1.5 to 6.0, from 1.5 to 6.5, from 1.5 to 7.0, from 1.5 to 7.5, from 1.5 to 8.0, from 1.5 to 8.5, from 1.5 to 9.0, from 1.5 to 9.5, from 1.5 to 10.0, from 1.5 to 10.5, from 1.5 to 11.0, from 1.5 to 11.5, from 1.5 to 12.0, from 1.5 to 13.0, from 1.5 to 14.0, from 1.5 to 15.0, from 1.5 to 16.0, from 1.5 to 17.0, from 1.5 to 18.0, from 2.0 to 8.0, from 2.0 to 8.5, from 2.0 to 9.0, from 2.0 to 9.5, from 2.0 to 10.0, from 2.0 to 10.5, from 2.0 to 11.0, from 2.0 to 11.5, from 2.0 to 12.0, from 2.0 to 13.0, from 2.0 to 14.0, from 2.0 to 15.0, from 2.0 to 16.0, from 2.0 to 17.0, from 2.0 to 18.0, from 2.5 to 8.0, from 2.5 to 8.5, from 2.5 to 9.0, from 2.5 to 9.5, from 2.5 to 10.0, from 2.5 to 10.5, from 2.5 to 11.0, from 2.5 to 11.5, from 2.5 to 12.0, from 2.5 to 13.0, from 2.5 to 14.0, from 2.5 to 15.0, from 2.5 to 16.0, from 2.5 to 17.0, from 2.5 to 18.0, from 3.0 to 10.0, from 3.0 to 10.5, from 3.0 to 11.0, from 3.0 to 11.5, from 3.0 to 12.0, from 3.0 to 13.0, from 3.0 to 14.0, from 3.0 to 15.0, from 3.0 to 16.0, from 3.0 to 17.0, from 3.0 to 18.0, from 3.5 to 4.0, from 3.5 to 4.5, from 3.5 to 5.0, from 3.5 to 5.5, from 3.5 to 6.0, from 3.5 to 6.5, from 3.5 to 12.0, from 3.5 to 13.0, from 3.5 to 14.0, from 3.5 to 15.0, from 3.5 to 16.0, from 3.5 to 17.0, from 3.5 to 18.0, from 4.0 to 4.5, from 4.0 to 5.0, from 4.0 to 5.5, from 4.0 to 6.0, from 4.0 to 6.5, from 4.0 to 7.0, from 4.0 to 10.0, from 4.0 to 10.5, from 4.0 to 11.0, from 4.0 to 12.0, from 4.0 to 13.0, from 4.0 to 14.0, from 4.0 to 15.0, from 4.0 to 16.0, from 4.0 to 17.0, or from 4.0 to 18.0.

The amount corresponding to the sweetness intensity of X1 of the high-intensity sweetener refers to an amount at which the sweetness intensity of X1 is exhibited under the condition that the high-intensity sweetener is dissolved in water at 20°C having the same volume as that of the oral composition of the present invention.

The amount of the high-intensity sweetener may also be Pa·ppm, where Pa·ppm is the amount corresponding to the sweetness intensity of X1. Pa can be from about 1 to about 800, from about 5 to about 800, from about 10 to about 800, from about 15 to about 800, from about 20 to about 800, from about 25 to about 800, from about 30 to about 800, from about 35 to about 800, from about 40 to about 800, from about 45 to about 800, from about 50 to about 800, from about 55 to about 800, from about 20 to about 750, from about 25 to about 750, from about 30 to about 750, from about 35 to about 750, from about 40 to about 750, from about 45 to about 750, from about 50 to about 750, from about 55 to about 750, from about 20 to about 700, from about 25 to about 700, from about 30 to about 700, from about 35 to about 700, from about 40 to about 700, from about 45 to about 700, from about 50 to about 700, from about 55 to about 700, from about 20 to about 650, from about 25 to about 650, from about 30 to about 650, from about 35 to about 650, from about 40 to about 650, from about 45 to about 650, from about 50 to about 650, from about 55 to about 650, from about 20 to about 600, from about 25 to about 600, from about 30 to about 600, from about 35 to about 600, from about 40 to about 600, from about 45 to about 600, from about 50 to about 600, from about 55 to about 600, from about 20 to about 550, from about 25 to about 550, from about 30 to about 550, from about 35 to about 550, from about 40 to about 550, from about 45 to about 550, from about 50 to about 550, from about 55 to about 550, from about 20 to about 540, from about 25 to about 540, from about 30 to about 540, from about 35 to about 540, from about 40 to about 540, from about 45 to about 540, from about 50 to about 540, from about 55 to about 540, from about 20 to about 530, from about 25 to about 530, from about 30 to about 530, from about 35 to about 530, from about 40 to about 530, from about 45 to about 530, from about 50 to about 530, from about 55 to about 530, from about 20 to about 520, from about 25 to about 520, from about 30 to about 520, from about 35 to about 520, from about 40 to about 520, from about 45 to about 520, from about 50 to about 520, from about 55 to about 520, from about 20 to about 510, from about 25 to about 510, from about 30 to about 510, from about 35 to about 510, from about 40 to about 510, from about 45 to about 510, from about 50 to about 510, from about 55 to about 510, from about 20 to about 505, from about 25 to about 505, from about 30 to about 505, from about 35 to about 505, from about 40 to about 505, from about 45 to about 505, from about 50 to about 505, from about 55 to about 505, from about 20 to about 500, from about 25 to about 500, from about 30 to about 500, from about 35 to about 500, from about 40 to about 500, from about 45 to about 500, from about 50 to about 500, from about 55 to about 500, from about 20 to about 495, from about 25 to about 495, from about 30 to about 495, from about 35 to about 495, from about 40 to about 495, from about 45 to about 495, from about 50 to about 495, from about 55 to about 495, from about 20 to about 490, from about 25 to about 490, from about 30 to about 490, from about 35 to about 490, from about 40 to about 490, from about 45 to about 490, from about 50 to about 490, or from about 55 to about 490.

Pa may also be from 1 to 1500, from 1 to 1200, from 5 to 1200, from 1 to 1000, from 5 to 1000, from 10 to 1000, from 1 to 900, from 5 to 900, from 10 to 900, from 15 to 900, from 20 to 900, from 25 to 900, from 30 to 900, from 35 to 900, from 40 to 900, from 45 to 900, from 50 to 900, from 55 to 900, from 1 to 800, from 5 to 800, from 10 to 800, from 15 to 800, from 20 to 800, from 25 to 800, from 30 to 800, from 35 to 800, from 40 to 800, from 45 to 800, from 50 to 800, from 55 to 800, from 1 to 700, from 5 to 700, from 10 to 700, from 15 to 700, from 20 to 700, from 25 to 700, from 30 to 700, from 35 to 700, from 40 to 700, from 45 to 700, from 50 to 700, from 55 to 700, from 1 to 600, from 5 to 600, from 10 to 600, from 15 to 600, from 20 to 600, from 25 to 600, from 30 to 600, from 35 to 600, from 40 to 600, from 45 to 600, from 50 to 600, from 55 to 600, from 1 to 550, from 1 to 540, from 1 to 530, from 1 to 520, from 1 to 510, from 1 to 505, from 1 to 500, from 1 to 495, from 1 to 490, from 5 to 550, from 5 to 540, from 5 to 530, from 5 to 520, from 5 to 510, from 5 to 505, from 5 to 500, from 5 to 495, from 5 to 490, from 10 to 550, from 10 to 540, from 10 to 530, from 10 to 520, from 10 to 510, from 10 to 505, from 10 to 500, from 10 to 495, from 10 to 490, from 15 to 550, from 15 to 550, from 15 to 530, from 15 to 520, from 15 to 510, from 15 to 505, from 15 to 500, from 15 to 495, or from 15 to 490.

Pa can also be from about 100 to about 500, from about 100 to about 450, from about 100 to about 400, from about 100 to about 350, from about 100 to about 300, from about 100 to about 250, from about 100 to about 200, from about 150 to about 500, from about 150 to about 450, from about 150 to about 400, from about 150 to about 350, from about 150 to about 300, from about 150 to about 250, from about 150 to about 200, from about 200 to about 500, from about 200 to about 450, from about 200 to about 400, from about 200 to about 350, from about 200 to about 300, or from about 200 to about 250.

X2 is not particularly limited as long as it is larger than X1, but may be from 0.5 to 6.0, from 0.5 to 6.5, from 0.5 to 7.0, from 0.5 to 7.5, from 0.5 to 8.0, from 0.5 to 8.5, from 0.5 to 9.0, from 0.5 to 9.5, from 0.5 to 10.0, from 0.5 to 10.5, from 0.5 to 11.0, from 0.5 to 11.5, from 0.5 to 12.0, from 0.5 to 13.0, from 0.5 to 14.0, from 0.5 to 15.0, from 0.5 to 16.0, from 0.5 to 17.0, from 0.5 to 18.0, from 1.0 to 6.0, from 1.0 to 6.5, from 1.0 to 7.0, from 1.0 to 7.5, from 1.0 to 8.0, from 1.0 to 8.5, from 1.0 to 9.0, from 1.0 to 9.5, from 1.0 to 10.0, from 1.0 to 10.5, from 1.0 to 11.0, from 1.0 to 11.5, from 1.0 to 12.0, from 1.0 to 13.0, from 1.0 to 14.0, from 1.0 to 15.0, from 1.0 to 16.0, from 1.0 to 17.0, from 1.0 to 18.0, from 1.5 to 6.0, from 1.5 to 6.5, from 1.5 to 7.0, from 1.5 to 7.5, from 1.5 to 8.0, from 1.5 to 8.5, from 1.5 to 9.0, from 1.5 to 9.5, from 1.5 to 10.0, from 1.5 to 10.5, from 1.5 to 11.0, from 1.5 to 11.5, from 1.5 to 12.0, from 1.5 to 13.0, from 1.5 to 14.0, from 1.5 to 15.0, from 1.5 to 16.0, from 1.5 to 17.0, from 1.5 to 18.0, from 2.0 to 8.0, from 2.0 to 8.5, from 2.0 to 9.0, from 2.0 to 9.5, from 2.0 to 10.0, from 2.0 to 10.5, from 2.0 to 11.0, from 2.0 to 11.5, from 2.0 to 12.0, from 2.0 to 13.0, from 2.0 to 14.0, from 2.0 to 15.0, from 2.0 to 16.0, from 2.0 to 17.0, from 2.0 to 18.0, from 2.5 to 8.0, from 2.5 to 8.5, from 2.5 to 9.0, from 2.5 to 9.5, from 2.5 to 10.0, from 2.5 to 10.5, from 2.5 to 11.0, from 2.5 to 11.5, from 2.5 to from 12.0, from 2.5 to 13.0, from 2.5 to 14.0, from 2.5 to 15.0, from 2.5 to 16.0, from 2.5 to 17.0, from 2.5 to 18.0, from 3.0 to 10.0, from 3.0 to 10.5, from 3.0 to 11.0, from 3.0 to 11.5, from 3.0 to 12.0, from 3.0 to 13.0, from 3.0 to 14.0, from 3.0 to 15.0, from 3.0 to 16.0, from 3.0 to 17.0, from 3.0 to 18.0, from 3.5 to 4.0, from 3.5 to 4.5, from 3.5 to 5.0, from 3.5 to 5.5, from 3.5 to 6.0, from 3.5 to 6.5, from 3.5 to 12.0, from 3.5 to 13.0, from 3.5 to 14.0, from 3.5 to 15.0, from 3.5 to 16.0, from 3.5 to 17.0, from 3.5 to 18.0, from 4.0 to 20, from 4.0 to 15, from 4.0 to 12.5, from 4.0 to 10, from 4.5 to 20, from 4.5 to 15, from 4.5 to 12.5, from 4.5 to 10, from 5.0 to 20, from 5.0 to 15, from 5.0 to 12.5, from 5.0 to 10, from 5.5 to 20, from 5.5 to 15, from 5.5 to 12.5, from 5.5 to 10, from 6.0 to 20, from 6.0 to 15, from 6.0 to 12.5, from 6.0 to 10, from 6.5 to 20, from 6.5 to 15. from 6.5 to 12.5, from 6.5 to 10, from 7.0 to 20, from 7.0 to 15, from 7.0 to 12.5, from 7.0 to 10, from 7.5 to 20, from 7.5 to 15, from 7.5 to 12.5, from 7.5 to 10, from 7.5 to 9, from 7.5 to 8, from 8.0 to 20, from 8.0 to 20, from 8.0 to 15, from 8.0 to 12.5, from 8.0 to 10, from 8.5 to 20, from 8.5 to 15, from 8.5 to 12.5, from 8.5 to 10, from 9.0 to 20, from 9.0 to 15, from 9.0 to 12.5, from 9.0 to 10, from 9.5 to 20, from 9.5 to 15, from 9.5 to 12.5, from 9.5 to 10, from 10.0 to 20, from 10.0 to 15, from 10.0 to 12.5, from 10.5 to 20, from 10.5 to 15, or from 10.5 to 12.5.

X2 may also be from 4.0 to 18, from 4.0 to 16, from 4.0 to 15.5, from 4.0 to 14, from 4.5 to 18, from 4.5 to 16, from 4.5 to 15.5, from 4.5 to 14, from 5.0 to 18, from 5.0 to 16, from 5.0 to 15.5, from 5.0 to 14, from 5.5 to 18, from 5.5 to 16, from 5.5 to 15.5, from 5.5 to 14, from 6.0 to 18, from 6.0 to 16, from 6.0 to 15.5, from 6.0 to 14, from 6.5 to 18, from 6.5 to 16, from 6.5 to 15.5, from 6.5 to 14, from 7.0 to 18, from 7.0 to 16, from 7.0 to 15.5, from 7.0 to 14, from 7.5 to 18, from 7.5 to 16, from 7.5 to 15.5, from 7.5 to 14, from 7.5 to 9, from 7.5 to 8, from 8.0 to 18, from 8.0 to 18, from 8.0 to 16, from 8.0 to 15.5, from 8.0 to 14, from 8.5 to 18, from 8.5 to 16, from 8.5 to 15.5, from 8.5 to 14, from 9.0 to 18, from 9.0 to 16, from 9.0 to 15.5, from 9.0 to 14, from 9.5 to 18, from 9.5 to 16, from 9.5 to 15.5, from 9.5 to 14, from 10.0 to 18, from 10.0 to 16, from 10.0 to 15.5, from 10.5 to 18, from 10.5 to 16, or from 10.5 to 15.5.

It has already been described that the oral composition of the present invention exhibits enhanced sweetness. Whether or not the sweetness of the oral composition of the present invention is enhanced can be evaluated by a panelist trained on sensory perception. Furthermore, the sweetness intensity of the oral composition of the present invention can be measured by preparing reference oral compositions (e.g., beverages) as a reference for sweetness with varying sucrose concentrations such as sweetness intensities of 1, 2, 3, 4, 5, 6, 7, 8, 9, 10, 11, 12, 13, 14 and 15, and comparing the sweetness of the oral composition of the present invention with the sweetness of the reference oral compositions by a panelist. Note that the reference oral compositions (for example, beverages) having sweetness intensities of 1, 2, ..., and 15 are prepared by adding sucrose to an oral composition not containing sucrose in such a manner that the sucrose content is 1 g/100 g, 2 g/100 g, ..., and 15 g/100 g, respectively.

Furthermore, among the reference oral compositions having a lower sweetness than that of the oral composition of the present invention in the measurement, the reference oral composition having a sweetness closest to that of the oral composition of the present invention is selected, sucrose is added to the selected reference oral composition to perform adjustment in such a manner that the same sweetness as that of the oral composition of the present invention is exhibited. Then, the sweetness intensity of the oral composition of the present invention can also be measured from the content of sucrose contained in the adjusted reference oral composition.

Other examples of the method for measuring a sweetness of the oral composition of the present invention include sweetness intensity evaluation using a visual analogue scale (VAS method). As for the VAS method, reference can be made to a document such as Journal of Japanese Society of Stomatognathic Function (2014) 20 pp. 115-129 (Toyoda et al., "Construction of a Screening Test for Gustatory Function in Four Basic Tastes"). To be specific, in the measurement of the sweetness intensity by the VAS method, for example, an evaluator evaluates the sweetness intensity by defining the lower end as "not sweet at all" and the upper end as "cannot consider anything sweeter than this", using paper on which a straight line representing the sweetness intensity is drawn, and representing the sweetness intensity felt at that time by a position on the straight line.

The level of the sweetness intensity can also be determined without quantifying the sweetness intensity of the test oral composition, for example, by a three-alternative forced choice method (3-AFC) in which selection is made to be sweeter than, not sweeter than, or as sweet as the reference oral composition by sensory evaluation, or by a two-alternative forced choice method (2-AFC) in which selection is made to be sweet or not sweet by sensory evaluation. The sensory evaluation may be performed by a plurality of panelists trained on sensory recognition, and in a case where at least one panelist evaluates as "sweet", the test oral composition can be evaluated as having a higher sweetness intensity than that of the reference oral composition. For example, in a case where about 10% or more, about 20% or more, about 25% or more, about 30% or more, about 33% or more, about 40% or more, about 50% or more, about 60% or more, about 67% or more, about 70% or more, about 75% or more, about 80% or more, or about 90% or more of the panelists evaluate the test oral composition as "sweet" as compared with the reference oral composition, the test oral composition can be evaluated as having a high sweetness intensity as compared with the reference oral composition. It is preferable to be evaluated as "sweet" by more panelists. In a preferred aspect, about 25% or more, about 33% or more, about 50% or more, about 67% or more, about 75% or more, about 80% or more, or about 90% or more of the panelists evaluate the test oral composition as "sweet" as compared with the reference oral composition. In a particularly preferred aspect, about 50% or more, about 67% or more, about 75% or more, about 80% or more, or about 90% or more of the panelists evaluate the test oral composition as "sweet" as compared with the reference oral composition.

The sweetness intensity of the oral composition of the present invention is not particularly limited as long as it is acceptable as a food. For example, the sweetness intensity may be, as the sweetness degree, from 4.0 to 20, from 4.0 to 15, from 4.0 to 12.5, from 4.0 to 10, from 4.5 to 20, from 4.5 to 15, from 4.5 to 12.5, from 4.5 to 10, from 5.0 to 20, from 5.0 to 15, from 5.0 to 12.5, from 5.0 to 10, from 5.5 to 20, from 5.5 to 15, from 5.5 to 12.5, from 5.5 to 10, from 6.0 to 20, from 6.0 to 15, from 6.0 to 12.5, from 6.0 to 10, from 6.5 to 20, from 6.5 to 15, from 6.5 to 12.5, from 6.5 to 10, from 7.0 to 20, from 7.0 to 15, from 7.0 to 12.5, from 7.0 to 10, from 7.5 to 20, from 7.5 to 15, from 7.5 to 12.5, from 7.5 to 10, from 7.5 to 9, from 7.5 to 8, from 8.0 to 20, from 8.0 to 20, from 8.0 to 15, from 8.0 to 12.5, from 8.0 to 10, from 8.5 to 20, from 8.5 to 15, from 8.5 to 12.5, from 8.5 to 10, from 9.0 to 20, from 9.0 to 15, from 9.0 to 12.5, from 9.0 to 10, from 9.5 to 20, from 9.5 to 15, from 9.5 to 12.5, from 9.5 to 10, from 10.0 to 20, from 10.0 to 15, from 10.0 to 12.5, from 10.5 to 20, from 10.5 to 15, or from 10.5 to 12.5. The sweetness intensity of the oral composition is provided by the components (a) to (d) and any additional components.

The energy (total energy amount) of the oral composition according to the present invention can be, depending on an embodiment, from 0 to 50 kcal/100 mL or less, from 0 to 45 kcal/100 mL, from 0 to 40 kcal/100 mL, from 0 to 35 kcal/100 mL, from 0 to 30 kcal/100 mL, from 0 to 24 kcal/100 mL, from 0 to 22 kcal/100 mL, from 0 to 20 kcal/100 mL, from 0 to 15 kcal/100 mL, from 0 to 10 kcal/100 mL, from 0 to 5 kcal/100 mL, from 0.1 to 50 kcal/100 mL, from 0.1 to 45 kcal/100 mL, from 0.1 to 40 kcal/100 mL, from 0.1 to 35 kcal/100 mL, from 0.1 to 30 kcal/100 mL, from 0.1 to 24 kcal/100 mL, from 0.1 to 22 kcal/100 mL, from 0.1 to 20 kcal/100 mL, from 0.1 to 15 kcal/100 mL, from 0.1 to 10 kcal/100 mL, from 0.1 to 5 kcal/100 mL, from 1 to 50 kcal/100 mL, from 1 to 45 kcal/100 mL, from 1 to 40 kcal/100 mL, from 1 to 35 kcal/100 mL, from 1 to 30 kcal/100 mL, from 1 to 24 kcal/100 mL, from 1 to 22 kcal/100 mL, from 1 to 20 kcal/100 mL, from 1 to 15 kcal/100 mL, from 1 to 10 kcal/100 mL, from 1 to 5 kcal/100 mL, from 5 to 50 kcal/100 mL, from 5 to 45 kcal/100 mL, from 5 to 40 kcal/100 mL, from 5 to 35 kcal/100 mL, from 5 to 30 kcal/100 mL, from 5 to 24 kcal/100 mL, from 5 to 20 kcal/100 mL, from 5 to 15 kcal/100 mL, from 5 to 10 kcal/100 mL, from 10 to 50 kcal/100 mL, from 10 to 45 kcal/100 mL, from 10 to 40 kcal/100 mL, from 10 to 35 kcal/100 mL, from 10 to 30 kcal/100 mL, from 10 to 24 kcal/100 mL, from 10 to 20 kcal/100 mL, from 10 to 15 kcal/100 mL, from 15 to 50 kcal/100 mL, from 15 to 45 kcal/100 mL, from 15 to 40 kcal/100 mL, from 15 to 35 kcal/100 mL, from 15 to 30 kcal/100 mL, from 15 to 24 kcal/100 mL, from 15 to 20 kcal/100 mL, from 20 to 50 kcal/100 mL, from 20 to 45 kcal/100 mL, from 20 to 40 kcal/100 mL, from 20 to 35 kcal/100 mL, from 20 to 30 kcal/100 mL, from 20 to 24 kcal/100 mL, from 24 to 50 kcal/100 mL, from 24 to 45 kcal/100 mL, from 24 to 40 kcal/100 mL, from 24 to 35 kcal/100 mL, or from 24 to 30 kcal/100 mL.

Also, the energy (total energy amount, TE) of the oral compositions of the present invention can be, depending on an embodiment (for example, an embodiment comprising a caloric sweetener), $0 < TE \leq 50$ kcal/100 mL, $0 < TE \leq 45$ kcal/100 mL, $0 < TE \leq 40$ kcal/100 mL, $0 < TE \leq 35$ kcal/100 mL, $0 < TE \leq 30$ kcal/100 mL, $0 < TE \leq 24$ kcal/100 mL, $0 < TE \leq 22$ kcal/100 mL, $0 < TE \leq 20$ kcal/100 mL, $0 < TE \leq 15$ kcal/100 mL, $0 < TE \leq 10$ kcal/100 mL, or $0 < TE \leq 5$ kcal/100 mL (that is, it does not become completely 0).

The components (a) and (b) can be combined in any manner. As shown in Examples described below, the sweetness intensity of X2, which is higher than the sweetness intensity of X1 only by the component (a), can be provided by adding the component (b) to the component (a). That is, the sweetness of the component (a) can be enhanced by the component (b). Thus, it is possible to produce an oral composition such as a food without using sucrose having a high calorie or while reducing the amount of sucrose used while maintaining the sweetness equivalent to that of an oral composition containing sucrose. Accordingly, it is possible to design a new low-calorie sweet food or the like. In a case of a zero-calorie design, a high-intensity sweetener having a particularly excellent taste quality such as Reb D or Reb M is used as the component (a), D-allulose or erythritol is used as an additional sweet substance, and the sweetness is improved with a low concentration of a capsaicinoid. In a case where it is desired to adjust the calorie of the food not to 0 but to a low calorie or the like, a caloric sweetener such as sucrose, glucose, fructose, or sorbitol can be blended as an additional sweet substance.

[High-intensity sweetener]

The high-intensity sweetener (as used herein, sometimes abbreviated as "sweetener (a)" or "component (a)") refers to a compound that has a stronger sweetness than that of sucrose, and encompasses a naturally occurring compound, a synthetic compound, or a combination of naturally occurring and synthetic compounds. In the same amount as sucrose, the high-intensity sweetener exhibits a sweetness being 5 times or more, 10 times or more, 50 times or more, 100 times or more, 500 times or more, 1000 times or more, 5000 times or more, 10000 times or more, 50000 times or more, or 100000 times or more that of sucrose.

Specific examples of the high-intensity sweetener include peptide-based sweeteners such as aspartame, neotame, and advantame; sucrose derivatives such as sucralose; synthetic sweeteners (including sweeteners also naturally occurring, but mainly distributed in the form of synthetic products, such as neohesperidin dihydrochalcone) such as acesulfame K (hereinafter, sometimes abbreviated as Ace K), saccharin, saccharin sodium, sodium cyclamate, dulcin, disodium glycyrrhizinate, trisodium glycyrrhizinate, and neohesperidin dihydrochalcone; sweeteners extracted from plants, such as thaumatin, monellin, curculin, mabinlin, brazzein, pentadin, hernandulcin, 4β-hydroxyhernandulcin, miracullin, glycyrrhizin, rubusoside, and phyllodulcin; plant extracts containing a high-intensity sweetener component, such as Stevia rebaudiana (stevia) extract, Siraitia grosvenorii (luo han guo) extract, Glycyrrhiza glabra extract, Rubus suavissimus S. Lee (sugar tea) extract, Hydrangea macrophylla var. thunbergii (Japanese sweet tea) extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana extract, Capparis masaikai (Mabinlang) extract, and Lippia dulcis (Aztec sweet herb) extract; sweet components in the extracts: steviol glycosides such as stevia extract and stevia derivatives such as enzyme-treated stevia obtained by adding glucose to enzyme-treated stevia; mogrosides obtained by treating luo han guo and luo han guo extract; glycosides obtained from plant extracts such as a phyllodulcin glycoside; a sweet component contained in Glycyrrhiza glabra plant (a triterpene glycoside such as glycyrrhizin); a sweet component contained in Rubus suavissimus S. Lee plant (a diterpene glycoside such as rubusoside); a sweet component contained in Hydrangea macrophylla var. thunbergii plant (a dihydroisocoumarin such as phyllodulcin); a sweet component contained in Sclerochiton ilicifolius plant (an amino acid such as monatin); a sweet component contained in Thaumataococcus daniellii Benth plant (a protein such as thaumatin); a sweet component contained in Dioscoreophyllum volkensii plant (a protein such as monellin); a sweet component contained in Curculigo latifolia plant (a protein such as curculin); a sweet component contained in Richadella dulcifica plant (a protein such as miracullin); a sweet component contained in Pentadiplandra brazzeana plant (proteins such as brazzein and pentadin); a sweet component contained in Capparis masaikai plant (a protein such as mabinlin); and a sweet component contained in Lippia dulcis plant (sesquiterpenes such as hernandulcin and 4β-hydroxyhemandulcin).

Examples of steviol glycosides include rebaudioside A (in the present specification, "rebaudioside" is sometimes abbreviated as "Reb"), Reb B, Reb C, Reb D, Reb E, Reb F, Reb I, Reb J, Reb K, Reb M, Reb N, Reb O, Reb Q, Reb R, dulcoside A, dulcoside C, rubusoside, steviol, steviolmonoside, steviolbioside, and stevioside. Examples of mogrosides include mogroside IV (hereinafter, "mogroside" is sometimes abbreviated as "Mog"), and Mog V.

The glycyrrhiza extract refers to a substance containing glycyrrhizic acid as a main component, which is obtained from the root or rhizome of Glycyrrhiza uralensis Fischer, Glycyrrhiza inflata Batalin, or Glycyrrhiza glabra Linne. Examples of the glycyrrhiza extract include glycyrrhiza extract, glycyrrhizin, and licorice extract.

The sucrose derivatives include, for example, those obtained by substituting an OH group or an H group of sucrose with another substituent, and examples thereof include a halogen derivative of sucrose (sucralose) and an oxathiazinone dioxide derivative.

In a preferred aspect of the present invention, the high-intensity sweetener is selected from good taste high-intensity sweeteners. As used herein, "good taste high-intensity sweeteners" means high-intensity sweet substances having one or more taste properties selected from (1) less astringency, (2) less metallic taste, (3) less lingering sweetness, and (4) less bitterness as compared with Reb A. Whether or not a certain sweet substance has the above-mentioned taste properties is known or can be determined based on sensory evaluation or the like. Non-limiting examples of the good taste high-intensity sweetener include Reb D, Reb M, neohesperidin dihydrochalcone, glycyrrhizin, thaumatin, monellin, mogroside, rubusoside, curculin, mabinline, brazzein, pentadin, phyllodulcin, hernandulcin, miraculin, good taste quality Stevia rebaudiana plant-containing sweet component, Siraitia grosvenorii plant-containing sweet component, Glycyrrhiza glabra plant-containing sweet component, Rubus suavissimus S. Lee plant-containing sweet component, Hydrangea macrophylla var. thunbergii plant-containing sweet component, Sclerochiton ilicifolius plant-containing sweet component, Thaumataococcus daniellii Benth plant-containing sweet component, Dioscoreophyllum volkensii plant-containing sweet component, Curculigo latifolia plant-containing sweet component, Richardella dulcifica plant-containing sweet component, Pentadiplandra brazzeana plant-containing sweet component, Capparis masaikai plant-containing sweet component, and Lippia dulcis plant-containing sweet component, or derivatives thereof, or combinations thereof. The good taste high-intensity sweetener does not include the main components of the stevia sweetener such as Reb A and stevioside. In a certain aspect, the good taste high-intensity sweetener includes Reb D, Reb M, mogroside (e.g., Mog V), thaumatin, brazzein, or combinations thereof. In another certain aspect, the good taste high-intensity sweetener includes Reb D, Reb M, mogroside (e.g., Mog V), thaumatin, or a combination thereof. In a preferred aspect of the present invention, the good taste high-intensity sweetener includes Reb D, Reb M, Mog V, luo han guo extract, and combinations thereof.

In one aspect of the present invention, the high-intensity sweetener may be naturally occurring in a plant or the like, or may be artificially produced (for example, by bioconversion, chemical synthesis, or the like), but is preferably a naturally occurring sweetener. As used herein, the term "naturally occurring" does not mean that a high-intensity sweet substance contained in the oral composition of the present invention is a natural substance, and if the same substance is naturally occurring, the high-intensity sweet substance contained in the oral composition of the present invention may be a substance (non-natural substance) artificially produced (for example, by bioconversion).

Non-limiting examples of the sweetener (a) include Reb A, Reb D, Reb M, neohesperidin dihydrochalcone, glycyrrhizin, thaumatin, monellin, mogroside, rubusoside, curculin, mabinline, brazzein, pentadin, phyllodulcin, hernandulcin, miraculin, sucralose, Ace K, Stevia rebaudiana plant-containing sweetener, Siraitia grosvenorii plant-containing sweetener, Glycyrrhiza glabra plant-containing sweetener, Rubus suavissimus S. Lee plant-containing sweetener, Hydrangea macrophylla var. thunbergii plant-containing sweetener, Sclerochiton ilicifolius plant-containing sweetener, Thaumataococcus daniellii Benth plant-containing sweetener, Dioscoreophyllum volkensii plant-containing sweetener, Curculigo latifolia plant-containing sweetener, Richardella dulcifica plant-containing sweetener, Pentadiplandra brazzeana plant-containing sweetener, Capparis masaikai plant-containing sweetener, Lippia dulcis plant-containing sweetener or derivatives thereof, or combinations thereof. In a certain aspect, the sweetener (a) includes Reb A, Reb D, Reb M, mogroside (e.g., Mog V), sucralose, Ace K, or a combination thereof. In another certain aspect, the sweetener (a) includes Reb A, Reb D, Reb M, mogroside (e.g., Mog V), sucralose, Ace K, thaumatin, or a combination thereof. In a preferred aspect of the present invention, the high-intensity sweetener includes at least one selected from the group consisting of Reb A, Reb D, Reb M, Mog V, luo han guo extract, sucralose, Ace K, and combinations thereof. In one aspect of the present invention, the sweetener (a) consists essentially of sweeteners other than the major component of a stevia sweetener, such as Reb A and stevioside. As used herein, "consist essentially of" means that the sweetener used in the present invention can contain the main component of the stevia sweetener within a range that does not impair the effects of the present invention. For example, in the sweetener (a) used in the present invention, preferably 90% or more, more preferably 95% or more, and further preferably 98% or more is composed of sweeteners other than Reb A and stevioside.

Reb A, Reb D, and Reb M may be directly extracted from stevia or may be obtained by adding glucose to a compound having another structure and contained in a stevia extract.

The luo han guo extract as a sweetener is an extract of luo han guo containing a sweet substance derived from luo han guo, and is approved and commercially available as a food additive in various countries including Japan. Examples of the sweet substance derived from luo han guo include Mog V, Mog IV, 11-oxo-mogroside V, and siamenoside I.

Mog V is one of the main mogrol glycosides contained in luo han guo, and has been reported to exhibit excellent sweetness properties close to that of sucrose as compared with Reb A. Mog V can be obtained from a luo han guo extract (e.g., an alcohol extract of luo han guo) by purification by chromatography or the like. Alternatively, Mog V may be obtained by adding glucose to a compound having another structure contained in the luo han guo extract.

The luo han guo extract preferably includes Mog V and the proportion thereof is not limited, and may be 10 wt.% or more, 15 wt.% or more, 20 wt.% or more, 25 wt.% or more, 30 wt.% or more, 35 wt.% or more, 40 wt.% or more, 45 wt.% or more, 50 wt.% or more, 55 wt.% or more, 60 wt.% or more, 65 wt.% or more, 70 wt.% or more, or 75 wt.% or more of the total dry weight of the luo han guo extract. The content of Mog V can be determined by a known technique, for example, liquid chromatography. The luo han guo extract can be obtained by extracting the fruit of luo han guo (Siraitia grosvenorii) with an appropriate solvent (for example, an aqueous solvent such as water, an alcohol solvent such as ethanol or methanol, or a mixed solvent of an aqueous solvent and an alcohol solvent such as hydrous ethanol or hydrous methanol), followed by an optional treatment such as defatting, purification, concentration, or drying.

Mog V may be highly pure, and may have a purity of, for example, 80% or more, 85% or more, 90% or more, 91% or more, 92% or more, 93% or more, 94% or more, 95% or more, 96% or more, 97% or more, or 98% or more. As a matter of course, the purer the Mog V obtained by purifying the luo han guo extract is, the less the content of components of the luo han guo extract other than Mog Vis.

In another aspect of the present invention, the Mog V may be less pure, and may have a purity of, for example, 50% or more, 55% or more, 60% or more, 65% or more, 70% or more, or 75% or more. For example, in a case where the sweetness intensity exhibited by sucrose per unit concentration Brix 1 is defined as sweetness degree 1, the calculated sweetness degree of Mog V having a purity of about 65% is about 175. In another aspect of the present invention, the luo han guo extract containing about 30 wt.% of Mog V may be used as the high-intensity sweetener, and in the case where the sweetness intensity exhibited by sucrose per unit concentration Brix 1 is defined as sweetness degree 1, the calculated sweetness degree of the luo han guo extract is about 100.

The high-intensity sweetener is contained in an amount corresponding to the sweetness intensity of X1 as described above. In the case where the sweetness intensity exhibited by sucrose per unit concentration Brix 1 is defined as sweetness degree 1, the sweetness degree of Reb D is, for example, about 225, the sweetness degree of Reb M is, for example, about 230, the sweetness degree of Reb B is, for example, about 325, the sweetness degree of Reb A is, for example, from 200 to 300 (central value 250), the sweetness degree of Reb N is, for example, from 200 to 250 (central value 225), the sweetness degree of Reb O is, for example, from 200 to 250 (central value 225), the sweetness degree of Reb E is, for example, from 70 to 80 (central value 75), the sweetness degree of luo han guo extract (containing 40% of Mog V) is, for example, about 130, the sweetness degree of Mog V is, for example, about 270, the sweetness degree of thaumatin is, for example, about 2000, and the sweetness degree of brazzein is, for example, from 500 to 2000 (central value 1250). A numerical value obtained by multiplying these sweetness degrees by the concentration (w/v% (that can be regarded as w/w% in the case of a beverage)) of the high-intensity sweetener in the oral composition is the sweetness intensity of the high-intensity sweetener. When X1 of these sweeteners is determined in the present specification, the above-mentioned sweetness degree (the center value for those indicated by numerical ranges) is used. Note that the relative ratios of the sweetness degrees of various sweeteners to the sweetness degree of sucrose of 1 can be determined from a known sugar sweetness conversion table (for example, Beverage Japan, Inc., "Beverage Terminological Dictionary", literature p. 11) or the like. In the present specification, the center value is used when the sweetness degree is indicated in a numerical range. However, for a sweetener whose sweetness degree value varies depending on documents, the relative ratio of the sweetness degree thereof to the sweetness degree of sucrose of 1 can be determined by a sensory test. Examples of such a sensory test include a method in which samples are prepared by adding sucrose to pure water in such a manner that Brix ranges from 3.0 to 5.0 in increments of 0.5, and a sucrose-added sample having a sweetness intensity equivalent to that of an aqueous solution of a sweetener having a predetermined concentration is selected from the samples.

In an aspect of the present invention, the high-intensity sweetener includes at least one selected from the group consisting of steviol glycosides, luo han guo extract, mogrol glycosides, Ace K, sucralose, Thaumataococcus daniellii Benth plant-containing sweet component, Pentadiplandra brazzeana plant-containing sweet component, artificial sweeteners, and combinations thereof. In a preferred aspect of the present invention, the high-intensity sweetener includes at least one selected from the group consisting of Reb A, Reb B, Reb C, Reb D, Reb E, Reb F, Reb I, Reb J, Reb K, Reb M, Reb N, Reb O, Reb Q, Reb R, dulcoside A, dulcoside C, rubusoside, steviolmonoside, steviolbioside, stevioside, luo han guo extract, Mog V, thaumatin, brazzein, aspartame, Ace K, sucralose, glycyrrhiza extract, saccharine, and combinations thereof.

In some aspects, the sweetener (a) includes the following combination: Reb A and Reb M; Reb A and Reb D; Reb D and Reb M; Reb A, Reb D, and Reb M; Reb A and Mog V; Reb D and Mog V; Reb M and Mog V; Reb A, Reb M, and Mog V; Reb A, Reg D, and Mog V; Reb D, Reb M, and Mog V; Reb A and neohesperidin dihydrochalcone; Reb D and neohesperidin dihydrochalcone; Reb M and neohesperidin dihydrochalcone; Reb A, Reb M, and neohesperidin dihydrochalcone; Reb A, Reb D, and neohesperidin dihydrochalcone; Reb D, Reb M, and neohesperidin dihydrochalcone; Mog V and neohesperidin dihydrochalcone; Reb D, Reb M, Mog V, and neohesperidin dihydrochalcone; Reb A and brazzein; Reb D and brazzein; Reb M and brazzein; Mog V and brazzein; neohesperidin dihydrochalcone and brazzein; Reb M, Reb D, Brazzein, and Mog V; Reb M, Reb D, brazzein, and neohesperidin dihydrochalcone; Reb M, Reb D, brazzein, and neohesperidin dihydrochalcone; or Reb M, Reb D, brazzein, Mog V, and neohesperidin dihydrochalcone.

In another aspect, the sweetener (a) includes the following combination: Reb A and thaumatin; Reb D and thaumatin; Reb M and thaumatin; Mog V and thaumatin; Reb A, Reb M, and thaumatin; Reb A, Reb D, and thaumatin; Reb D, Reb M, and thaumatin; Reb A, Mog V, and thaumatin; Reb D, Mog V, and thaumatin; Reb M, Mog V, and thaumatin; or Reb D, Reb M, Mog V, and thaumatin.

In another aspect, the sweetener (a) includes the following combination: Reb A and sucralose; Reb D and sucralose; Reb M and sucralose; Mog V and sucralose; Reb A, Reb M, and sucralose; Reb A, Reb D, and sucralose; Reb D, Reb M, and sucralose; Reb A, Mog V, and sucralose; Reb D, Mog V, and sucralose; Reb M, Mog V, and sucralose; or Reb D, Reb M, Mog V, and sucralose.

In another aspect, the sweetener (a) includes the following combination of: Reb A and Ace K; Reb D and Ace K; Reb M and Ace K; Mog V and Ace K; Reb A, Reb M, and Ace K; Reb A, Reb D, and Ace K; Reb D, Reb M, and Ace K; Reb A, Mog V, and Ace K; Reb D, Mog V, and Ace K; Reb M, Mog V, and Ace K; or Reb D, Reb M, Mog V, and Ace K.

In another aspect, the sweetener (a) includes the following combination of: sucralose and Ace K; Reb A, sucralose, and Ace K; Reb D, sucralose, and Ace K; Reb M, sucralose, and Ace K; Mog V, sucralose, and Ace K; Reb A, Reb M, sucralose, Ace K; Reb A, Reb D, sucralose, and Ace K; Reb D, Reb M, sucralose, and Ace K; Reb A, Mog V, sucralose, and Ace K; Reb D, Mog V, sucralose, and Ace K; Reb M, Mog V, sucralose, and Ace K; or Reb D, Reb M, Mog V, sucralose, and Ace K.

In one aspect of the present invention, the sweetener (a) may include a high-intensity sweetener selected from Reb A, Reb D, Reb M, Mog V, luo han guo extract, and combinations thereof, preferably one or more high-intensity sweeteners selected from Reb D, Reb M, and combinations thereof.

The amount of the sweetener (a) included in the oral composition in one aspect of the present invention is the combined amount of all sweet substances in a case where the sweetener (a) includes a combination of a plurality of sweet substances. In a case where the amount of the sweetener (a) is represented by Pa (ppm), Pa can be, for example, from about 20 to about 800, from about 25 to about 800, from about 30 to about 800, from about 35 to about 800, from about 40 to about 800, from about 45 to about 800, from about 50 to about 800, from about 55 to about 800, from about 20 to about 750, from about 25 to about 750, from about 30 to about 750, from about 35 to about 750, from about 40 to about 750, from about 45 to about 750, from about 50 to about 750, from about 55 to about 750, from about 20 to about 700, from about 25 to about 700, from about 30 to about 700, from about 35 to about 700, from about 40 to about 700, from about 45 to about 700, from about 50 to about 700, from about 55 to about 700, from about 20 to about 650, from about 25 to about 650, from about 30 to about 650, from about 35 to about 650, from about 40 to about 650, from about 45 to about 650, from about 50 to about 650, from about 55 to about 650, from about 20 to about 600, from about 25 to about 600, from about 30 to about 600, from about 35 to about 600, from about 40 to about 600, from about 45 to about 600, from about 50 to about 600, from about 55 to about 600, from about 20 to about 550, from about 25 to about 550, from about 30 to about 550, from about 35 to about 550, from about 40 to about 550, from about 45 to about 550, from about 50 to about 550, from about 55 to about 550, from about 20 to about 540, from about 25 to about 540, from about 30 to about 540, from about 35 to about 540, from about 40 to about 540, from about 45 to about 540, from about 50 to about 540, from about 55 to about 540, from about 20 to about 530, from about 25 to about 530, from about 30 to about 530, from about 35 to about 530, from about 40 to about 530, from about 45 to about 530, from about 50 to about 530, from about 55 to about 530, from about 20 to about 520, from about 25 to about 520, from about 30 to about 520, from about 35 to about 520, from about 40 to about 520, from about 45 to about 520, from about 50 to about 520, from about 55 to about 520, from about 20 to about 510, from about 25 to about 510, from about 30 to about 510, from about 35 to about 510, from about 40 to about 510, from about 45 to about 510, from about 50 to about 510, from about 55 to about 510, from about 20 to about 505, from about 25 to about 505, from about 30 to about 505, from about 35 to about 505, from about 40 to about 505, from about 45 to about 505, from about 50 to about 505, from about 55 to about 505, from about 20 to about 500, from about 25 to about 500, from about 30 to about 500, from about 35 to about 500, from about 40 to about 500, from about 45 to about 500, from about 50 to about 500, from about 55 to about 500, from about 20 to about 495, from about 25 to about 495, from about 30 to about 495, from about 35 to about 495, from about 40 to about 495, from about 45 to about 495, from about 50 to about 495, from about 55 to about 495, from about 20 to about 490, from about 25 to about 490, from about 30 to about 490, from about 35 to about 490, from about 40 to about 490, from about 45 to about 490, from about 50 to about 490, from about 55 to about 490, from about 100 to about 500, from about 100 to about 450, from about 100 to about 400, from about 100 to about 350, from about 100 to about 300, from about 100 to about 250, from about 100 to about 200, from about 150 to about 500, from about 150 to about 450, from about 150 to about 400, from about 150 to about 350, from about 150 to about 300, from about 150 to about 250, from about 150 to about 200, from about 20 to about 200, from about 200 to about 500, from about 200 to about 450, from about 200 to about 400, from about 200 to about 350, from about 200 to about 300, or from about 200 to about 250.

In one aspect of the present invention, the amount Pa ppm of the high-intensity sweetener may be from about 20 to about 600 ppm, from about 30 to about 550 ppm, from about 55 to about 490 ppm, from about 20 to about 200 ppm, from about 100 to about 500 ppm, or from about 150 to about 350 ppm.

[Capsaicinoid or capsicum extract]

Capsaicinoids are a generic term for capsaicin and a homolog thereof. A capsaicinoid has a structure in which vanillyl amine and fatty acid are amide-bonded, and encompasses dihydrocapsaicin, nordihydrocapsaicin, norcapsaicin, nornorcapsaicin, homocapsaicin, homocapsaicin I, homocapsaicin II, homodihydrocapsaicin (homodihydrocapsaicin I), homodihydrocapsaicin II, bishomocapsaicin, nordihydrocapsaicin II, capsaicinol, nonivamide, and the like, in addition to capsaicin. The capsaicinoid may be naturally derived or artificially synthesized. The capsaicinoid can be extracted from a plant of the genus Capsicum of the family Solanaceae. Thus, in the composition of the present invention, the capsaicinoid may be contained as an extract of the capsicum plant (capsicum extract). The proportions of capsaicin, dihydrocapsaicin, nordihydrocapsaicin, homocapsaicin, and homodihydrocapsaicin in capsaicinoids of capsicum are said to be from 46 to 77%, from 21 to 40%, from 2 to 12%, from 1 to 2%, and from 0.6 to 2%, respectively (https://www.maffgo.jp/j/syouan/seisaku/capsaicin/syousai/).

The capsicum extract can be obtained by treating a capsicum plant under conditions in which capsaicinoids are extracted. Examples of the extraction method include immersion, steam distillation, Soxhlet extraction, and microwave-assisted extraction. Examples of the extraction solvent include water, ethanol, methanol, acetone, acetonitrile, hexane, isopropanol, diethyl ether, xylene, and toluene (Abdurahman et al., Aust J Basic & Appl Sci. 2016; 10(10): 263-75). An extraction method and an extraction solvent by which an extract suitable for food is obtained are preferable. The capsicum plant is not particularly limited as long as it contains a capsaicinoid, and Capsicum annuum, Capsicum baccatum, Capsicum frutescens, Capsicum pubescens, or the like can be used. Among the capsicums, capsicum varieties of pungent species are preferred, such as red chilli, green chilli, Carolina Reaper, Trinidad scorpion, Trinidad scorpion yellow, Bhut Jolokia, Habanero chilli, Prik Kee Noo, Aji limo, Beaver Dam, Aji chino, Belbisen, Indian pepper, jarapeno pepper, Serrano der Sol, Korean chili pepper, Vietnam orange, gold chili, Hungarian black, Scotch bonnet, and the like are preferred. As the capsicum extract, for example, those commercially available as a capsicum extraction liquid, a capsicum extract, and a capsicum extract can be used.

In some aspects, the capsicum extract can be obtained by extracting a ground product of a capsicum plant (e.g., capsicum) with an organic solvent. The obtained extract can be subjected to a treatment such as removal of the solvent by distillation or the like and/or drying followed by washing with water.

The concentration of the capsaicinoid in the capsicum extract is not particularly limited as long as the desired capsaicinoid concentration can be obtained when the capsicum extract is used in the oral composition of the present invention. For example, the total concentration of capsaicin, dihydrocapsaicin, and nordihydrocapsaicin may be about 0.001 ppm or more, about 0.005 ppm or more, about 0.01 ppm or more, about 0.05 ppm or more, about 0.1 ppm or more, about 0.5 ppm or more, about 1 ppm or more, about 5 ppm or more, about 10 ppm or more, about 50 ppm or more, about 100 ppm or more, about 500 ppm or more, about 750 ppm or more, about 900 ppm or more, about 1000 ppm or more, about 2000 ppm or more, about 3000 ppm or more, about 4000 ppm or more, about 5000 ppm or more, or about 10000 ppm or more, and the concentration of capsaicin may be about 0.0007 ppm or more, about 0.0035 ppm or more, about 0.007 ppm or more, about 0.035 ppm or more, about 0.07 ppm or more, about 0.35 ppm or more, about 0.7 ppm or more, about 3.5 ppm or more, about 7 ppm or more, about 35 ppm or more, about 70 ppm or more, about 350 ppm or more, about 700 ppm or more, about 3500 ppm or more, or about 7000 ppm or more. The concentration of the capsaicinoid in the capsicum extract may be expressed as the concentration of capsaicin or as the total concentration of a plurality of capsaicinoids (e.g., the total concentration of capsaicin, dihydrocapsaicin, and nordihydrocapsaicin, the total concentration of capsaicin and dihydrocapsaicin, or the like). The concentration of capsaicinoids in the capsicum extract can be determined by any known measurement method, such as HPLC.

The weight ratio or molar ratio of capsaicin to dihydrocapsaicin in the capsicum extract may be, for example, in a range of about 1 : 1 to about 1 : 5, about 1 : 1.5 to about 1 : 4.5, about 1 : 2 to about 1 : 4, about 1 : 2.5 to about 1 : 3.5, or the like, particularly about 1 : 3. The weight ratio or molar ratio of capsaicin to nordihydrocapsaicin in the capsicum extract may be, for example, in a range of about 1 : 3 to about 1 : 60, about 1 : 10 to about 1 : 55, about 1 : 20 to about 1 : 50, about 1 : 30 to about 1 : 45, or the like, particularly about 1 : 40. The weight ratio or molar ratio of dihydrocapsaicin to nordihydrocapsaicin in the capsicum extract may be, for example, in a range of about 1 : 1 to about 1 : 20, about 1 : 3 to about 1 : 18, about 1 : 5 to about 1 : 16, about 1 : 10 to about 1 : 15, or the like, particularly about 1 : 13.

In some aspects of the oral composition of the present invention, the capsaicinoid or capsicum extract (as used herein, sometimes abbreviated as "capsaicinoid or the like" or "component (b)") is contained at a concentration that can enhance the sweetness of the high-intensity sweetener. Whether or not the sweetness is enhanced can be evaluated by the above-mentioned sensory test or the like. In some aspects of the oral composition of the present invention, the component (b) is contained at a concentration less than the taste recognition threshold. In some aspects of the oral composition of the present invention, the component (b) is contained at a concentration less than the taste detection threshold.

As used herein, the taste recognition threshold refers to the minimum concentration at which a taste can be recognized, and the taste detection threshold refers to the minimum concentration at which a difference from water can be clearly shown but the type of taste (e.g., sweet, pungent, bitter, sour, and the like) does not have to necessarily be recognized (e.g., Eur J Clin Nutr (2004) 58, 629-636). In addition, it is known that the taste recognition threshold is about 1.5 to 2 times as high as the taste detection threshold (Yuki Yamauchi et al., "Whole Mouth Method Gustatory Test (First Report) - Fundamental Studies and Principal Component Analysis -", Nippon Jibiinkoka Gakkai Kaiho, Vol. 98 (1995) No. 1, p. 119-129; and Reiko Omori, "Comparisons of the taste sensitivity between three generations", Bulletin of the Faculty of Education of Utsunomiya University, Part 1 (2013) Vol. 63, p. 201-210)). Note that although there is a way of thinking that pungency is not included in taste, pungency is included in taste in the present specification.

In the present invention, an actually measured value is preferably used as the taste recognition threshold or the taste detection threshold. The taste recognition threshold or the taste detection threshold of a certain substance can be determined by a sensory test in which aqueous solutions containing the substance are prepared at a plurality of concentration levels, and the solutions are tasted in order from the lowest concentration to the highest concentration to evaluate whether or not the taste is felt. A concentration at which a difference from water is detected is set as the taste detection threshold, and a concentration at which a taste is recognized is set as the taste recognition threshold. For example, for a substance whose theoretical value (literature value) has already been determined, aqueous solutions having a plurality of concentration levels are prepared in the vicinity of the concentration of the substance, and a plurality of persons who have been trained on sensory perception conduct the test to determine the threshold. In one aspect of the present invention, the taste recognition threshold refers to the taste recognition threshold in pure water. In another aspect of the present invention, the taste recognition threshold refers to the taste recognition threshold in an oral composition. In the case of the capsaicinoid or the like in the oral composition of the present invention, the taste recognition threshold in pure water means the minimum concentration at which the taste can be recognized when only the capsaicinoid or the like is added to pure water. For example, in the case of the capsaicinoid or the like in the oral composition of the present invention, the taste recognition threshold in the oral composition means the minimum concentration at which the taste (pungency) of the capsaicinoid or the like can be recognized when components of the oral composition of the present invention other than the component (b) and the capsaicinoid or the like are added to pure water. The taste recognition threshold of the capsaicinoid or the like is typically about 0.09 ppm as the concentration of capsaicin, and by preparing aqueous solutions at a plurality of concentration levels centered on this concentration, the sensory test can be efficiently performed.

The concentration of the capsaicinoid contained in the oral composition of the present invention is not limited, and may be, for example, about 1.00 ppm or less, about 0.95 ppm or less, about 0.90 ppm or less, about 0.85 ppm or less, about 0.80 ppm or less, about 0.75 ppm or less, about 0.70 ppm or less, about 0.65 ppm or less, about 0.60 ppm or less, about 0.55 ppm or less, about 0.50 ppm or less, about 0.45 ppm or less, about 0.40 ppm or less, about 0.35 ppm or less, about 0.30 ppm or less, about 0.25 ppm or less, about 0.20 ppm or less, about 0.15 ppm or less. about 0.10 ppm or less, about 0.095 ppm or less, about 0.090 ppm or less, about 0.085 ppm or less, about 0.080 ppm or less, about 0.075 ppm or less, about 0.070 ppm or less, about 0.065 ppm or less. about 0.060 ppm or less, about 0.055 ppm or less, about 0.050 ppm or less, about 0.045 ppm or less, about 0.040 ppm or less, about 0.035 ppm or less, about 0.030 ppm or less, about 0.025 ppm or less, about 0.020 ppm or less, about 0.015 ppm or less, about 0.010 ppm or less, or about 0.005 ppm or less.

In one aspect, the concentration of capsaicinoid contained in the oral composition of the present invention is not limited, and may be, for example, from about 0.0005 ppm to about 1.0 ppm, from about 0.0005 ppm to about 0.9 ppm, from about 0.0005 ppm to about 0.8 ppm, from about 0.0005 ppm to about 0.7 ppm, from about 0.0005 ppm to about 0.6 ppm, from about 0.0005 ppm to about 0.5 ppm, from about 0.0005 ppm to about 0.4 ppm, from about 0.0005 ppm to about 0.3 ppm, from about 0.0005 ppm to about 0.2 ppm, from about 0.0005 ppm to about 0.1 ppm, from about 0.0005 ppm to about 0.09 ppm, from about 0.0005 ppm to about 0.08 ppm, from about 0.0005 ppm to about 0.07 ppm, from about 0.0005 ppm to about 0.06 ppm, from about 0.0005 ppm to about 0.05 ppm, from about 0.0005 ppm to about 0.04 ppm, from about 0.0005 ppm to about 0.03 ppm, from about 0.0005 ppm to about 0.02 ppm, from about 0.0005 ppm to about 0.01 ppm, from about 0.0005 ppm to about 0.005 ppm, from about 0.0007 ppm to about 1 ppm, from about 0.0007 ppm to about 0.9 ppm, from about 0.0007 ppm to about 0.8 ppm, from about 0.0007 ppm to about 0.7 ppm, from about 0.0007 ppm to about 0.6 ppm, from about 0.0007 ppm to about 0.5 ppm, from about 0.0007 ppm to about 0.4 ppm, from about 0.0007 ppm to about 0.3 ppm, from about 0.0007 ppm to about 0.2 ppm, from about 0.0007 ppm to about 0.1 ppm, from about 0.0007 ppm to about 0.09 ppm, from about 0.0007 ppm to about 0.08 ppm, from about 0.0007 ppm to about 0.07 ppm, from about 0.0007 ppm to about 0.06 ppm, from about 0.0007 ppm to about 0.05 ppm, from about 0.0007 ppm to about 0.04 ppm, from about 0.0007 ppm to about 0.03 ppm, from about 0.0007 ppm to about 0.02 ppm, from about 0.0007 ppm to about 0.01 ppm, from about 0.0007 ppm to about 0.005 ppm, from about 0.0009 ppm to about 1 ppm, from about 0.0009 ppm to about 0.9 ppm, from about 0.0009 ppm to about 0.8 ppm, from about 0.0009 ppm to about 0.7 ppm, from about 0.0009 ppm to about 0.6 ppm, from about 0.0009 ppm to about 0.5 ppm, from about 0.0009 ppm to about 0.4 ppm, from about 0.0009 ppm to about 0.3 ppm, from about 0.0009 ppm to about 0.2 ppm, from about 0.0009 ppm to about 0.1 ppm, from about 0.0009 ppm to about 0.09 ppm, from about 0.0009 ppm to about 0.08 ppm, from about 0.0009 ppm to about 0.07 ppm, from about 0.0009 ppm to about 0.06 ppm, from about 0.0009 ppm to about 0.05 ppm, from about 0.0009 ppm to about 0.04 ppm, from about 0.0009 ppm to about 0.03 ppm, from about 0.0009 ppm to about 0.02 ppm, from about 0.0009 ppm to about 0.01 ppm, from about 0.0009 ppm to about 0.005 ppm, from about 0.001 ppm to about 1 ppm, from about 0.001 ppm to about 0.9 ppm, from about 0.001 ppm to about 0.8 ppm, from about 0.001 ppm to about 0.7 ppm, from about 0.001 ppm to about 0.6 ppm, from about 0.001 ppm to about 0.5 ppm, from about 0.001 ppm to about 0.4 ppm, from about 0.001 ppm to about 0.3 ppm, from about 0.001 ppm to about 0.2 ppm, from about 0.001 ppm to about 0.1 ppm, from about 0.001 ppm to about 0.09 ppm, from about 0.001 ppm to about 0.08 ppm, from about 0.001 ppm to about 0.07 ppm, from about 0.001 ppm to about 0.06 ppm, from about 0.001 ppm to about 0.05 ppm, from about 0.001 ppm to about 0.04 ppm, from about 0.001 ppm to about 0.03 ppm, from about 0.001 ppm to about 0.02 ppm, from about 0.001 ppm to about 0.01 ppm, from about 0.001 ppm to about 0.005 ppm, from about 0.003 ppm to about 1 ppm, from about 0.003 ppm to about 0.9 ppm, from about 0.003 ppm to about 0.8 ppm, from about 0.003 ppm to about 0.7 ppm, from about 0.003 ppm to about 0.6 ppm, from about 0.003 ppm to about 0.5 ppm, from about 0.003 ppm to about 0.4 ppm, from about 0.003 ppm to about 0.3 ppm, from about 0.003 ppm to about 0.2 ppm, from about 0.003 ppm to about 0.1 ppm, from about 0.003 ppm to about 0.09 ppm, from about 0.003 ppm to about 0.08 ppm, from about 0.003 ppm to about 0.07 ppm, from about 0.003 ppm to about 0.06 ppm, from about 0.003 ppm to about 0.05 ppm, from about 0.003 ppm to about 0.04 ppm, from about 0.003 ppm to about 0.03 ppm, from about 0.003 ppm to about 0.02 ppm, from about 0.003 ppm to about 0.01 ppm, from about 0.003 ppm to about 0.005 ppm, from about 0.005 ppm to about 1 ppm, from about 0.005 ppm to about 0.9 ppm, from about 0.005 ppm to about 0.8 ppm, from about 0.005 ppm to about 0.7 ppm, from about 0.005 ppm to about 0.6 ppm, from about 0.005 ppm to about 0.5 ppm, from about 0.005 ppm to about 0.4 ppm, from about 0.005 ppm to about 0.3 ppm, from about 0.005 ppm to about 0.2 ppm, from about 0.005 ppm to about 0.1 ppm, from about 0.005 ppm to about 0.09 ppm, from about 0.005 ppm to about 0.08 ppm, from about 0.005 ppm to about 0.07 ppm, from about 0.005 ppm to about 0.06 ppm, from about 0.005 ppm to about 0.05 ppm, from about 0.005 ppm to about 0.04 ppm, from about 0.005 ppm to about 0.03 ppm, from about 0.005 ppm to about 0.02 ppm, from about 0.005 ppm to about 0.01 ppm, from about 0.009 ppm to about 1 ppm, from about 0.009 ppm to about 0.9 ppm, from about 0.009 ppm to about 0.8 ppm, from about 0.009 ppm to about 0.7 ppm, from about 0.009 ppm to about 0.6 ppm, from about 0.009 ppm to about 0.5 ppm, from about 0.009 ppm to about 0.4 ppm, from about 0.009 ppm to about 0.3 ppm, from about 0.009 ppm to about 0.2 ppm, from about 0.009 ppm to about 0.1 ppm, from about 0.009 ppm to about 0.09 ppm, from about 0.009 ppm to about 0.08 ppm, from about 0.009 ppm to about 0.07 ppm, from about 0.009 ppm to about 0.06 ppm, from about 0.009 ppm to about 0.05 ppm, from about 0.009 ppm to about 0.04 ppm, from about 0.009 ppm to about 0.03 ppm, from about 0.009 ppm to about 0.02 ppm, from about 0.009 ppm to about 0.01 ppm, from about 0.01 ppm to about 1 ppm, from about 0.01 ppm to about 0.9 ppm, from about 0.01 ppm to about 0.8 ppm, from about 0.01 ppm to about 0.7 ppm, from about 0.01 ppm to about 0.6 ppm, from about 0.01 ppm to about 0.5 ppm, from about 0.01 ppm to about 0.4 ppm, from about 0.01 ppm to about 0.3 ppm, from about 0.01 ppm to about 0.2 ppm, from about 0.01 ppm to about 0.1 ppm, from about 0.01 ppm to about 0.09 ppm, from about 0.01 ppm to about 0.08 ppm, from about 0.01 ppm to about 0.07 ppm, from about 0.01 ppm to about 0.06 ppm, from about 0.01 ppm to about 0.05 ppm, from about 0.01 ppm to about 0.04 ppm, from about 0.01 ppm to about 0.03 ppm, or from about 0.01 ppm to about 0.02 ppm.

The concentration may be the concentration of total capsaicinoids (e.g., all capsaicinoids detectable by HPLC or the sum of the major capsaicinoids, e.g., capsaicin and dihydrocapsaicin, or capsaicin, dihydrocapsaicin, and nordihydrocapsaicin), or the concentration of a specific capsaicinoid, e.g., capsaicin, dihydrocapsaicin, or the like, in the oral composition. The concentration of the capsicum extract in the oral composition of the present invention can be adjusted in such a manner that the capsaicinoid contained in the capsicum extract has the above-mentioned concentration.

[Optional components]

(Sodium)

The oral compositions of the present invention may comprise sodium as the component (c). The content of sodium (sodium atom) in the composition may typically be in a range of 160 mM or less (about 368 mg/100 mL or less), for example, from 0.5 mM to 160 mM (from about 1.15 to about 368 mg/100 mL). Sodium in the composition is preferably contained at a concentration that enhances the sweetness intensity of the composition. Sodium in the composition may be contained at less than the taste recognition threshold.

The content of sodium may be, depending on an embodiment, in a range of 0.1 mM to 160 mM, 0.1 mM to 80 mM, 0.1 mM to 70 mM, 0.1 mM to 60 mM, 0.1 mM to 50 mM, 0.1 mM to 40 mM, 0.1 mM to 30 mM, 0.1 mM to 20 mM, 0.1 mM to 15 mM, 0.1 mM to 10 mM, 0.1 mM to 7.5 mM, 0.1 mM to 5 mM, 0.1 mM to 2.5 mM, 0.1 mM to 1 mM, 0.1 mM to 0.75 mM, 0.1 mM to 0.5 mM, 0.1 mM to 0.25 mM, 0.25 mM to 160 mM, 0.25 mM to 80 mM, 0.25 mM to 70 mM, 0.25 mM to 60 mM, 0.25 mM to 50 mM, 0.25 mM to 40 mM, 0.25 mM to 30 mM, 0.25 mM to 20 mM, 0.25 mM to 15 mM, 0.25 mM to 10 mM, 0.25 mM to 7.5 mM, 0.25 mM to 5 mM, 0.25 mM to 2.5 mM, 0.25 mM to 1 mM, 0.25 mM to 0.75 mM, 0.25 mM to 0.5 mM, 0.5 mM to 160 mM, 0.5 mM to 80 mM, 0.5 mM to 70 mM, 0.5 mM to 60 mM, 0.5 mM to 50 mM, 0.5 mM to 40 mM, 0.5 mM to 30 mM, 0.5 mM to 20 mM, 0.5 mM to 15 mM, 0.5 mM to 10 mM, 0.5 mM to 7.5 mM, 0.5 mM to 5 mM, 0.5 mM to 2.5 mM, 0.5 mM to 1 mM, 0.5 mM to 0.75 mM, 0.75 mM to 160 mM, 0.75 mM to 80 mM, 0.75 mM to 70 mM, 0.75 mM to 60 mM, 0.75 mM to 50 mM, 0.75 mM to 40 mM, 0.75 mM to 30 mM, 0.75 mM to 20 mM, 0.75 mM to 15 mM, 0.75 mM to 10 mM, 0.75 mM to 7.5 mM, 0.75 mM to 5 mM, 0.75 mM to 2.5 mM, 0.75 mM to 1 mM, 1 mM to 160 mM, 1 mM to 80 mM, 1 mM to 70 mM, 1 mM to 60 mM, 1 mM to 50 mM, 1 mM to 40 mM, 1 mM to 30 mM, 1 mM to 20 mM, 1 mM to 15 mM, 1 mM to 10 mM, 1 mM to 7.5 mM, 1 mM to 5 mM, 1 mM to 2.5 mM, 2.5 mM to 160 mM, 2.5 mM to 80 mM, 2.5 mM to 70 mM, 2.5 mM to 60 mM, 2.5 mM to 50 mM, 2.5 mM to 40 mM, 2.5 mM to 30 mM, 2.5 mM to 20 mM, 2.5 mM to 15 mM, 2.5 mM to 10 mM, 2.5 mM to 7.5 mM, 2.5 mM to 5 mM, 5 mM to 160 mM, 5 mM to 80 mM, 5 mM to 70 mM, 5 mM to 60 mM, 5 mM to 50 mM, 5 mM to 40 mM, 5 mM to 30 mM, 5 mM to 20 mM, 5 mM to 15 mM, 5 mM to 10 mM, 5 mM to 7.5 mM, 7.5 mM to 160 mM, 7.5 mM to 80 mM, 7.5 mM to 70 mM, 7.5 mM to 60 mM, 7.5 mM to 50 mM, 7.5 mM to 40 mM, 7.5 mM to 30 mM, 7.5 mM to 20 mM, 7.5 mM to 15 mM, 7.5 mM to 10 mM, 10 mM to 160 mM, 10 mM to 80 mM, 10 mM to 70 mM, 10 mM to 60 mM, 10 mM to 50 mM, 10 mM to 40 mM, 10 mM to 30 mM, 10 mM to 20 mM, 10 mM to 15 mM, 15 mM to 160 mM, 15 mM to 80 mM, 15 mM to 70 mM, 15 mM to 60 mM, 15 mM to 50 mM, 15 mM to 40 mM, 15 mM to 30 mM, 15 mM to 20 mM, 20 mM to 160 mM, 20 mM to 80 mM, 20 mM to 70 mM, 20 mM to 60 mM, 20 mM to 50 mM, 20 mM to 40 mM, 20 mM to 30 mM, 30 mM to 160 mM, 30 mM to 80 mM, 30 mM to 70 mM, 30 mM to 60 mM, 30 mM to 50 mM, 30 mM to 40 mM, 40 mM to 160 mM, 40 mM to 80 mM, 40 mM to 70 mM, 40 mM to 60 mM, 40 mM to 50 mM, 50 mM to 160 mM, 50 mM to 80 mM, 50 mM to 70 mM, 50 mM to 60 mM, 60 mM to 160 mM, 60 mM to 80 mM, 60 mM to 70 mM, 70 mM to 160 mM, 70 mM to 80 mM, or 80 mM to 160 mM.

The form of sodium is not particularly limited as long as it is contained in an ingestible state in the oral composition of the present invention. For example, sodium may be in at least one form selected from the group consisting of sodium chloride, sodium hydroxide, sodium malate, sodium sulfate, sodium citrate (monosodium citrate, disodium citrate, trisodium citrate), sodium phosphate, sodium carbonate, sodium bicarbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof.

In one aspect of the present invention, the component (c) is substantially free of sodium derived from sodium components used as a preservative (e.g., sodium benzoate, sodium sulfite, sodium hyposulfite, sodium dehydroacetate, sodium pyrosulfite, sodium propionate, and the like).

In the present specification, the content of sodium in the oral composition can be measured by atomic absorption spectrometry, fluorescent X-ray elemental analysis, or the like. Note that in a case where the blending amount of the sodium-containing compound blended in the oral composition is known, a value calculated from the blending amount may be used.

In one aspect of the present invention, the amount of sodium comprised in the oral composition may be defined by the amount of the sodium source. The term "sodium source" means a compound capable of generating a sodium ion when the oral composition is placed in the mouth. The amount of the sodium source is the same as the above molar concentration of sodium in a case where the compound contains one sodium atom, and is the same as $1/n$ of the above molar concentration of sodium in a case where the compound contains n sodium atoms (here, n is a positive integer).

In an aspect in which the oral composition of the present invention contains sodium, the following oral composition (hereinafter, also referred to as an oral composition of an aspect A) is provided.

An oral composition comprising:

(a) a high-intensity sweetener in an amount corresponding to a sweetness intensity of X1;
(b) a capsaicinoid or capsicum extract at less than a taste recognition threshold; and
(c) sodium at 160 mM or less, wherein

the components (a) and (b) exhibit a sweetness having a sweetness intensity of X2, the components (a) to (c) exhibit a sweetness having a sweetness intensity of X3, and $0.1 < X1 < X2 < X3$ is satisfied.

X3 is not particularly limited as long as it is larger than X2, but may be from 0.5 to 6.0, from 0.5 to 6.5, from 0.5 to 7.0, from 0.5 to 7.5, from 0.5 to 8.0, from 0.5 to 8.5, from 0.5 to 9.0, from 0.5 to 9.5, from 0.5 to 10.0, from 0.5 to 10.5, from 0.5 to 11.0, from 0.5 to 11.5, from 0.5 to 12.0, from 0.5 to 13.0, from 0.5 to 14.0, from 0.5 to 15.0, from 0.5 to 16.0, from 0.5 to 17.0, from 0.5 to 18.0, from 1.0 to 6.0, from 1.0 to 6.5, from 1.0 to 7.0, from 1.0 to 7.5, from 1.0 to 8.0, from 1.0 to 8.5, from 1.0 to 9.0, from 1.0 to 9.5, from 1.0 to 10.0, from 1.0 to 10.5, from 1.0 to 11.0, from 1.0 to 11.5, from 1.0 to 12.0, from 1.0 to 13.0, from 1.0 to 14.0, from 1.0 to 15.0, from 1.0 to 16.0, from 1.0 to 17.0, from 1.0 to 18.0, from 1.5 to 6.0, from 1.5 to 6.5, from 1.5 to 7.0, from 1.5 to 7.5, from 1.5 to 8.0, from 1.5 to 8.5, from 1.5 to 9.0, from 1.5 to 9.5, from 1.5 to 10.0, from 1.5 to 10.5, from 1.5 to 11.0, from 1.5 to 11.5, from 1.5 to 12.0, from 1.5 to 13.0, from 1.5 to 14.0, from 1.5 to 15.0, from 1.5 to 16.0, from 1.5 to 17.0, from 1.5 to 18.0, from 2.0 to 8.0, from 2.0 to 8.5, from 2.0 to 9.0, from 2.0 to 9.5, from 2.0 to 10.0, from 2.0 to 10.5, from 2.0 to 11.0, from 2.0 to 11.5, from 2.0 to 12.0, from 2.0 to 13.0, from 2.0 to 14.0, from 2.0 to 15.0, from 2.0 to 16.0, from 2.0 to 17.0, from 2.0 to 18.0, from 2.5 to 8.0, from 2.5 to 8.5, from 2.5 to 9.0, from 2.5 to 9.5, from 2.5 to 10.0, from 2.5 to 10.5, from 2.5 to 11.0, from 2.5 to 11.5, from 2.5 to 12.0, from 2.5 to 13.0, from 2.5 to 14.0, from 2.5 to 15.0, from 2.5 to 16.0, from 2.5 to 17.0, from 2.5 to 18.0, from 3.0 to 10.0, from 3.0 to 10.5, from 3.0 to 11.0, from 3.0 to 11.5, from 3.0 to 12.0, from 3.0 to 13.0, from 3.0 to 14.0, from 3.0 to 15.0, from 3.0 to 16.0, from 3.0 to 17.0, from 3.0 to 18.0, from 3.5 to 4.0, from 3.5 to 4.5, from 3.5 to 5.0, from 3.5 to 5.5, from 3.5 to 6.0, from 3.5 to 6.5, from 3.5 to 12.0, from 3.5 to 13.0, from 3.5 to 14.0, from 3.5 to 15.0, from 3.5 to 16.0, from 3.5 to 17.0, from 3.5 to 18.0, from 4.0 to 20, from 4.0 to 15, from 4.0 to 12.5, from 4.0 to 10, from 4.5 to 20, from 4.5 to 15, from 4.5 to 12.5, from 4.5 to 10, from 5.0 to 20, from 5.0 to 15, from 5.0 to 12.5, from 5.0 to 10, from 5.5 to 20, from 5.5 to 15, from 5.5 to 12.5, from 5.5 to 10, from 6.0 to 20, from 6.0 to 15, from 6.0 to 12.5, from 6.0 to 10, from 6.5 to 20, from 6.5 to 15. from 6.5 to 12.5, from 6.5 to 10, from 7.0 to 20, from 7.0 to 15, from 7.0 to 12.5, from 7.0 to 10, from 7.5 to 20, from 7.5 to 15, from 7.5 to 12.5, from 7.5 to 10, from 7.5 to 9, from 7.5 to 8, from 8.0 to 20, from 8.0 to 20, from 8.0 to 15, from 8.0 to 12.5, from 8.0 to 10, from 8.5 to 20, from 8.5 to 15, from 8.5 to 12.5, from 8.5 to 10, from 9.0 to 20, from 9.0 to 15, from 9.0 to 12.5, from 9.0 to 10, from 9.5 to 20, from 9.5 to 15, from 9.5 to 12.5, from 9.5 to 10, from 10.0 to 20, from 10.0 to 15, from 10.0 to 12.5, from 10.5 to 20, from 10.5 to 15, or from 10.5 to 12.5.

X3 may also be from 4.0 to 18, from 4.0 to 16, from 4.0 to 15.5, from 4.0 to 14, from 4.5 to 18, from 4.5 to 16, from 4.5 to 15.5, from 4.5 to 14, from 5.0 to 18, from 5.0 to 16, from 5.0 to 15.5, from 5.0 to 14, from 5.5 to 18, from 5.5 to 16, from 5.5 to 15.5, from 5.5 to 14, from 6.0 to 18, from 6.0 to 16, from 6.0 to 15.5, from 6.0 to 14, from 6.5 to 18, from 6.5 to 16, from 6.5 to 15.5, from 6.5 to 14, from 7.0 to 18, from 7.0 to 16, from 7.0 to 15.5, from 7.0 to 14, from 7.5 to 18, from 7.5 to 16, from 7.5 to 15.5, from 7.5 to 14, from 7.5 to 9, from 7.5 to 8, from 8.0 to 18, from 8.0 to 18, from 8.0 to 16, from 8.0 to 15.5, from 8.0 to 14, from 8.5 to 18, from 8.5 to 16, from 8.5 to 15.5, from 8.5 to 14, from 9.0 to 18, from 9.0 to 16, from 9.0 to 15.5, from 9.0 to 14, from 9.5 to 18, from 9.5 to 16, from 9.5 to 15.5, from 9.5 to 14, from 10.0 to 18, from 10.0 to 16, from 10.0 to 15.5, from 10.5 to 18, from 10.5 to 16, or from 10.5 to 15.5.

(Sweetener)

The oral composition of the present invention may comprise a sweetener in addition to the high-intensity sweetener of the component (a). As used herein, the "sweetener" means any substance or group of substances that causes a sweetness response. Sweeteners can be classified into sugar-based sweeteners and non-sugar-based sweeteners based on structural features, and into low-intensity sweeteners and high-intensity sweeteners based on the sweetness degree. In addition, based on energy (calories), sweet substances can also be classified into caloric sweeteners and non-caloric sweeteners. Further, sweeteners can be classified into natural sweeteners and artificial sweeteners based on the method of acquisition.

Examples of the sugar-based sweetener include, but are not limited to, starch sugars such as sucrose, lactose, glucose, maltose, starch syrup, isomerized sugar, and fructose; sugar alcohols such as erythritol, sorbitol, mannitol, maltitol, xylitol, and palatinit; palatinose; fructo-oligosaccharide; coupling sugar[R]; galacto-oligosaccharide; lacto-oligosaccharide; raffinose; soybean oligosaccharide; and honey. The sugar-based sweetener also contains rare sugar.

The rare sugar refers to a monosaccharide and a derivative thereof which are present in a small amount in nature. For example, naturally occurring aldoses other than D-glucose, D-galactose, D-mannose, D-ribose, D-xylose, and L-arabinose, naturally occurring ketoses other than D-fructose, naturally occurring sugar alcohols other than D-sorbitol, and the like are encompassed in the rare sugar. Non-limiting examples of the rare sugar include ketoses such as D-tagatose, D-sorbose, D-allulose (D-psicose), L-fructose, L-allulose (L-psicose), L-tagatose, and L-sorbose; aldoses such as altrose and D-allose; and sugar alcohols such as xylitol, erythritol, and D-talitol.

The caloric sweetener typically refers to a sweet substance having an energy of 4 kcal/g. The energy of the sweet substance is known, or can be determined by measuring the content with HPLC or the like and multiplying it by an energy conversion factor, or by measuring physical combustion heat by using a calorimeter (for example, a bomb calorimeter or the like) and correcting the value with a digestibility coefficient, an amount of heat excreted, or the like. Non-limiting examples of the caloric sweetener include sucrose, lactose, glucose, maltose, starch syrup, isomerized sugar, and fructose.

The non-caloric sweetener typically refers to a sweetener having a property of being less digestible in the body and resulting in less energy being ingested, and means a sweet substance having an energy of less than 2 kcal/g, preferably less than 1 kcal/g, and more preferably less than 0.5 kcal/g. Non-limiting examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Sweet substances can also be classified on an energy (calorie) level. For example, sweet substances can be classified into sweet substances having an energy of 4 kcal/g or more and sweet substances having an energy of less than 4 kcal/g. The sweet substances having an energy of less than 4 kcal/g can be further classified into a sweet substance having an energy less than 3 kcal/g, a sweet substance having an energy of less than 2.5 kcal/g, a sweet substance having an energy of less than 2 kcal/g, a sweet substance having an energy of less than 1.5 kcal/g, a sweet substance having an energy of less than 1 kcal/g, a sweet substance having an energy of less than 0.5 kcal/g, a sweet substance having an energy of 1 kcal/g or more and less than 4 kcal/g, a sweet substance having an energy of 2 kcal/g or more and less than 4 kcal/g, a sweet substance having an energy of 3 kcal/g or more and less than 4 kcal/g, a sweet substance having an energy of 2 kcal/g or more and less than 3 kcal/g, a sweet substance having an energy of 1 kcal/g or more and less than 2 kcal/g, a sweet substance having an energy of 0 kcal/g or more and less than 2 kcal/g, or a sweet substance having an energy of 0 kcal/g or more and less than 1 kcal/g. Examples of the sweet substances having an energy of 4 kcal/g or more include sucrose, lactose, glucose, maltose, starch syrup, isomerized sugars, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having a sweetness equivalent to that of sucrose (for example, less than 5 times, about 0.1 to 2 times, about 0.5 to 1.5 times that of sucrose). Non-limiting examples of the low-intensity sweetener include saccharide low-intensity sweeteners such as sucrose, isomerized sugar, glucose, fructose, lactose, maltose, xylose, lactulose, fructooligosaccharide, maltooligosaccharide, isomaltooligosaccharide, galactooligosaccharide, coupling sugar[R], and palatinose; and sugar alcohol low-intensity sweeteners such as maltitol, sorbitol, erythritol, xylitol, lactitol, palatinit, and reduced starch saccharified product. In addition, as long as the sweetness degree is in the above range, examples of the low-intensity sweetener include rare sugars, caloric sweeteners, non-caloric sweeteners, sugar-based sweeteners, non-sugar-based sweeteners, natural sweeteners, and artificial sweeteners.

In one aspect of the present invention, the oral composition comprises the low-intensity sweetener. In this aspect of the present invention, there is provided the following oral composition (hereinafter, also referred to as an oral composition of an aspect B).

An oral composition comprising:

(a) a high-intensity sweetener in an amount corresponding to a sweetness intensity of X1;
(b) a capsaicinoid or capsicum extract at less than a taste recognition threshold; and
(d) a low-intensity sweetener in an amount corresponding to a sweetness intensity of X4 (as used herein, sometimes abbreviated as a "component (d)"), wherein

the components (a), (b), and (d) exhibit a sweetness having a sweetness intensity of X5, and 0.1 < X1 + X4 < X5 is satisfied. In one aspect of the present invention, the oral composition does not contain, as sweeteners, components other than (a) the high-intensity sweetener in an amount corresponding to a sweetness intensity of X1 and (d) the low-intensity sweetener in an amount corresponding to a sweetness intensity of X4.

In one aspect of the present invention, the low-intensity sweetener includes a sweetener selected from hexoses, pentoses, tetroses, polysaccharides in which the terminal sugar is an aldose or ketose, sugar alcohols, and combinations thereof. In another aspect of the present invention, the low-intensity sweetener includes a sweetener selected from glucose, sucrose, fructose, maltose, oligosaccharides, isomerized sugars, lactose, psicose, allose, tagatose, xylose, ribose, and combinations thereof. In yet another aspect of the present invention, the low-intensity sweetener includes a sweetener selected from glucose, sucrose, fructose, and combinations thereof.

X4 of the "sweetness intensity of X4" may be from 0 to 0.5, from 0 to 1.0, from 0 to 1.5, from 0 to 2.0, from 0 to 2.5, from 0 to 3.0, from 0 to 3.5, from 0 to 4.0, from 0 to 4.5, from 0 to 5.0, from 0 to 5.5, from 0 to 6.0, from 0 to 6.5, from 0 to 7.0, from 0 to 7.5, from 0 to 8.0, from 0 to 8.25, from 0 to 8.5, from 0 to 8.75. from 0 to 9.0, from 0 to 9.25, from 0 to 9.5, 0 to 9.75. from 0 to 10.0, from 0.05 to 0.5, from 0.05 to 1.0, from 0.05 to 1.5, from 0.05 to 2.0, from 0.05 to 2.5, from 0.05 to 3.0, from 0.05 to 3.5, from 0.05 to 4.0, from 0.05 to 4.5, from 0.05 to 5.0, from 0.05 to 5.5, from 0.05 to 6.0, from 0.05 to 6.5, from 0.05 to 7.0, from 0.05 to 7.5, from 0.05 to 8.0, from 0.05 to 8.25, from 0.05 to 8.5, from 0.05 to 8.75, from 0.05 to 9.0, from 0.05 to 9.25, from 0.05 to 9.5, from 0.05 to 9.75, from 0.05 to 10.0, from 0.1 to 0.5, from 0.1 to 1.0, from 0.1 to 1.5, from 0.1 to 2.0, from 0.1 to 2.5, from 0.1 to 3.0, from 0.1 to 3.5, from 0.1 to 4.0, from 0.1 to 4.5, from 0.1 to 5.0, from 0.1 to 5.5, from 0.1 to 6.0, from 0.1 to 6.5, from 0.1 to 7.0, from 0.1 to 7.5, from 0.1 to 8.0, from 0.1 to 8.25, from 0.1 to 8.5, from 0.1 to 8.75, from 0.1 to 9.0, from 0.1 to 9.25, from 0.1 to 9.5, from 0.1 to 9.75, from 0.1 to 10.0, from 0.5 to 0.5, from 0.5 to 1.0, from 0.5 to 1.5, from 0.5 to 2.0, from 0.5 to 2.5, from 0.5 to 3.0, from 0.5 to 3.5, from 0.5 to 4.0, from 0.5 to 4.5, from 0.5 to 5.0, from 0.5 to 5.5, from 0.5 to 6.0, from 0.5 to 6.5, from 0.5 to 7.0, from 0.5 to 7.5, from 0.5 to 8.0, from 0.5 to 8.25, from 0.5 to 8.5, from 0.5 to 8.75, from 0.5 to 9.0, from 0.5 to 9.25, from 0.5 to 9.5, from 0.5 to 9.75, from 0.5 to 10.0, from 1.0 to 0.5, from 1.0 to 1.0, from 1.0 to 1.5, from 1.0 to 2.0, from 1.0 to 2.5, from 1.0 to 3.0, from 1.0 to 3.5, from 1.0 to 4.0, from 1.0 to 4.5, from 1.0 to 5.0, from 1.0 to 5.5, from 1.0 to 6.0, from 1.0 to 6.5, from 1.0 to 7.0, from 1.0 to 7.5, from 1.0 to 8.0, from 1.0 to 8.25, from 1.0 to 8.5, from 1.0 to 8.75, from 1.0 to 9.0, from 1.0 to 9.25, from 1.0 to 9.5, from 1.0 to 9.75, from 1.0 to 10.0, from 1.5 to 0.5, from 1.5 to 1.0, from 1.5 to 1.5, from 1.5 to 2.0, from 1.5 to 2.5, from 1.5 to 3.0, from 1.5 to 3.5, from 1.5 to 4.0, from 1.5 to 4.5, from 1.5 to 5.0, from 1.5 to 5.5, from 1.5 to 6.0, from 1.5 to 6.5, from 1.5 to 7.0, from 1.5 to 7.5, from 1.5 to 8.0, from 1.5 to 8.25, from 1.5 to 8.5, from 1.5 to 8.75, from 1.5 to 9.0, from 1.5 to 9.25, from 1.5 to 9.5, from 1.5 to 9.75, from 1.5 to 10.0, from 2.0 to 0.5, from 2.0 to 1.0, from 2.0 to 1.5, from 2.0 to 2.0, from 2.0 to 2.5, from 2.0 to 3.0, from 2.0 to 3.5, from 2.0 to 4.0, from 2.0 to 4.5, from 2.0 to 5.0, from 2.0 to 5.5, from 2.0 to 6.0, from 2.0 to 6.5, from 2.0 to 7.0, from 2.0 to 7.5, from 2.0 to 8.0, from 2.0 to 8.25, from 2.0 to 8.5, from 2.0 to 8.75, from 2.0 to 9.0, from 2.0 to 9.25, from 2.0 to 9.5, from 2.0 to 9.75, from 2.0 to 10.0, from 2.5 to 0.5, from 2.5 to 1.0, from 2.5 to 1.5, from 2.5 to 2.0, from 2.5 to 2.5, from 2.5 to 3.0, from 2.5 to 3.5, from 2.5 to 4.0, from 2.5 to 4.5, from 2.5 to 5.0, from 2.5 to 5.5, from 2.5 to 6.0, from 2.5 to 6.5, from 2.5 to 7.0, from 2.5 to 7.5, from 2.5 to 8.0, from 2.5 to 8.25, from 2.5 to 8.5, from 2.5 to 8.75, from 2.5 to 9.0, from 2.5 to 9.25, from 2.5 to 9.5, from 2.5 to 9.75, from 2.5 to 10.0, from 0.1 to 5.9, from 3.0 to 3.5, from 3.0 to 4.0, from 3.0 to 4.5, from 3.0 to 5.0, or from 3.0 to 5.5.

X4 may also be from 0 to 10.5, from 0 to 11.0, from 0 to 11.5, from 0 to 12.0, from 0 to 12.5, from 0 to 13.0, from 0 to 13.5, from 0 to 14.0, from 0 to 14.5, from 0 to 15.0, from 0.05 to 10.5, from 0.05 to 11.0, from 0.05 to 11.5, from 0.05 to 12.0, from 0.05 to 12.5, from 0.05 to 13.0, from 0.05 to 13.5, from 0.05 to 14.0, from 0.05 to 14.5, from 0.05 to 15.0, from 0.1 to 10.5, from 0.1 to 11.0, from 0.1 to 11.5, from 0.1 to 12.0, from 0.1 to 12.5, from 0.1 to 13.0, from 0.1 to 13.5, from 0.1 to 14.0, from 0.1 to 14.5, from 0.1 to 15.0, from 0.5 to 10.5, from 0.5 to 11.0, from 0.5 to 11.5, from 0.5 to 12.0, from 0.5 to 12.5, from 0.5 to 13.0, from 0.5 to 13.5, from 0.5 to 14.0, from 0.5 to 14.5, from 0.5 to 15.0, from 1.0 to 10.5, from 1.0 to 11.0, from 1.0 to 11.5, from 1.0 to 12.0, from 1.0 to 12.5, from 1.0 to 13.0, from 1.0 to 13.5, from 1.0 to 14.0, from 1.0 to 14.5, from 1.0 to 15.0, 1.5 to 10.5, from 1.5 to 11.0, from 1.5 to 11.5, from 1.5 to 12.0, from 1.5 to 12.5, from 1.5 to 13.0, from 1.5 to 13.5, from 1.5 to 14.0, from 1.5 to 14.5, from 1.5 to 15.0, from 2.0 to 10.5, from 2.0 to 11.0, from 2.0 to 11.5, from 2.0 to 12.0, from 2.0 to 12.5, from 2.0 to 13.0, from 2.0 to 13.5, from 2.0 to 14.0, from 2.0 to 14.5, from 2.0 to 15.0, from 2.5 to 10.5, from 2.5 to 11.0, from 2.5 to 11.5, from 2.5 to 12.0, from 2.5 to 12.5, from 2.5 to 13.0, from 2.5 to 13.5, from 2.5 to 14.0, from 2.5 to 14.5, or from 2.5 to 15.0.

The amount corresponding to the sweetness intensity of X4 of the low-intensity sweetener refers to an amount (concentration) at which the low-intensity sweetener exhibits sweetness of the sweetness intensity of X4 under the condition that the low-intensity sweetener is dissolved in the same volume of water at 20°C as that of the oral composition of the present invention.

X5 is not particularly limited as long as it is larger than X1 + X4, and may be from 4.0 to 20, from 4.0 to 15, from 4.0 to 12.5, from 4.0 to 10, from 4.5 to 20, from 4.5 to 15, from 4.5 to 12.5, from 4.5 to 10, from 5.0 to 20, from 5.0 to 15, from 5.0 to 12.5, from 5.0 to 10, from 5.5 to 20, from 5.5 to 15, from 5.5 to 12.5, from 5.5 to 10, from 6.0 to 20, from 6.0 to 15, from 6.0 to 12.5, from 6.0 to 10, from 6.5 to 20, from 6.5 to 15, from 6.5 to 12.5, from 6.5 to 10, from 7.0 to 20, from 7.0 to 15, from 7.0 to 12.5, from 7.0 to 10, 7.5 to 20, from 7.5 to 15, from 7.5 to 12.5, from 7.5 to 10, from 7.5 to 9, from 7.5 to 8, from 8.0 to 20, from 8.0 to 20, from 8.0 to 15, from 8.0 to 12.5, from 8.0 to 10, from 8.5 to 20, from 8.5 to 15, from 8.5 to 12.5, from 8.5 to 10, from 9.0 to 20, from 9.0 to 15, from 9.0 to 12.5, from 9.0 to 10, from 9.5 to 20, from 9.5 to 15, from 9.5 to 12.5, from 9.5 to 10, from 10.0 to 20, from 10.0 to 15. from 10.0 to 12.5, from 10.5 to 20, from 10.5 to 15, or from 10.5 to 12.5.

X5 may also be from 4.0 to 18, from 4.0 to 16, from 4.0 to 15.5, from 4.0 to 14, from 4.5 to 18, from 4.5 to 16, from 4.5 to 15.5, from 4.5 to 14, from 5.0 to 18, from 5.0 to 16, from 5.0 to 15.5, from 5.0 to 14, from 5.5 to 18, from 5.5 to 16, from 5.5 to 15.5, from 5.5 to 14, from 6.0 to 18, from 6.0 to 16, from 6.0 to 15.5, from 6.0 to 14, from 6.5 to 18, from 6.5 to 16, from 6.5 to 15.5, from 6.5 to 14, from 7.0 to 18, from 7.0 to 16, from 7.0 to 15.5, from 7.0 to 14, from 7.5 to 18, from 7.5 to 16, from 7.5 to 15.5, from 7.5 to 14, 7.5 to 9, from 7.5 to 8, from 8.0 to 18, 8.0 to 18, from 8.0 to 16, from 8.0 to 15.5, from 8.0 to 14, from 8.5 to 18, from 8.5 to 16, from 8.5 to 15.5, from 8.5 to 14, from 9.0 to 18, from 9.0 to 16, from 9.0 to 15.5, from 9.0 to 14, from 9.5 to 18, from 9.5 to 16, from 9.5 to 15.5, from 9.5 to 14, from 10.0 to 18, from 10.0 to 16, from 10.0 to 15.5, from 10.5 to 18, from 10.5 to 16, or from 10.5 to 15.5.

In one aspect of the present invention, the oral composition comprises the low-intensity sweetener. In this aspect of the present invention, there is provided the following oral composition (hereinafter, also referred to as an oral composition of an aspect C).

An oral composition comprising:

(a) a high-intensity sweetener in an amount corresponding to a sweetness intensity of X1;
(b) a capsaicinoid or capsicum extract at less than a taste recognition threshold;
(c) sodium at 160 mM or less; and
(d) a low-intensity sweetener in an amount corresponding to a sweetness intensity of X4, wherein

the components (a), (b), and (d) exhibit a sweetness having a sweetness intensity of X5, the components (a) to (d) exhibit a sweetness having a sweetness intensity of X6, and 0.1 < X1 + X4 < X5 < X6 is satisfied. In one aspect of the present invention, the oral composition does not contain, as sweeteners, components other than (a) the high-intensity sweetener in an amount corresponding to a sweetness intensity of X1 and (d) the low-intensity sweetener in an amount corresponding to a sweetness intensity of X4.

X6 is not particularly limited as long as it is larger than X5, and may be from 4.0 to 20, from 4.0 to 15, from 4.0 to 12.5, from 4.0 to 10, from 4.5 to 20, from 4.5 to 15, from 4.5 to 12.5, from 4.5 to 10, from 5.0 to 20, from 5.0 to 15, from 5.0 to 12.5, from 5.0 to 10, from 5.5 to 20, from 5.5 to 15, from 5.5 to 12.5, from 5.5 to 10, from 6.0 to 20, from 6.0 to 15, from 6.0 to 12.5, from 6.0 to 10, from 6.5 to 20, from 6.5 to 15, from 6.5 to 12.5, from 6.5 to 10, from 7.0 to 20, from 7.0 to 15, from 7.0 to 12.5, from 7.0 to 10, from 7.5 to 20, from 7.5 to 15, from 7.5 to 12.5, from 7.5 to 10, from 7.5 to 9, from 7.5 to 8, from 8.0 to 20, from 8.0 to 20, from 8.0 to 15, from 8.0 to 12.5, from 8.0 to 10, from 8.5 to 20, from 8.5 to 15, from 8.5 to 12.5, from 8.5 to 10, from 9.0 to 20, from 9.0 to 15, from 9.0 to 12.5, from 9.0 to 10, from 9.5 to 20, from 9.5 to 15, from 9.5 to 12.5, from 9.5 to 10, from 10.0 to 20, from 10.0 to 15, from 10.0 to 12.5, from 10.5 to 20, from 10.5 to 15, or from 10.5 to 12.5.

X6 may also be from 4.0 to 18, from 4.0 to 16, from 4.0 to 15.5, from 4.0 to 14, from 4.5 to 18, from 4.5 to 16, from 4.5 to 15.5, from 4.5 to 14, from 5.0 to 18, from 5.0 to 16, from 5.0 to 15.5, from 5.0 to 14, from 5.5 to 18, from 5.5 to 16, from 5.5 to 15.5, from 5.5 to 14, from 6.0 to 18, from 6.0 to 16, from 6.0 to 15.5, from 6.0 to 14, from 6.5 to 18, from 6.5 to 16, from 6.5 to 15.5, from 6.5 to 14, from 7.0 to 18, from 7.0 to 16, from 7.0 to 15.5, from 7.0 to 14, from 7.5 to 18, from 7.5 to 16, from 7.5 to 15.5, from 7.5 to 14, from 7.5 to 9, from 7.5 to 8, from 8.0 to 18, from 8.0 to 18, from 8.0 to 16, from 8.0 to 15.5, from 8.0 to 14, from 8.5 to 18, from 8.5 to 16, from 8.5 to 15.5, from 8.5 to 14, from 9.0 to 18, from 9.0 to 16, from 9.0 to 15.5, from 9.0 to 14, from 9.5 to 18, from 9.5 to 16, from 9.5 to 15.5, from 9.5 to 14, from 10.0 to 18, from 10.0 to 16, from 10.0 to 15.5, from 10.5 to 18, from 10.5 to 16, or from 10.5 to 15.5.

(Other components)

Into the oral composition of the present invention, an antioxidant (such as sodium erythorbate), an emulsifier (such as sucrose fatty acid ester, sorbitan fatty acid ester, or polyglycerin fatty acid ester), an acidulant (such as phosphoric acid, citric acid, or malic acid), a flavoring, or the like can be appropriately blended as long as the effects of the present invention are not impaired.

[Exemplary aspects of oral composition of present invention]

In one aspect of the present invention, there is provided an oral composition comprising:

(a) a high-intensity sweetener in an amount corresponding to a sweetness intensity of X1; and

(b) a capsaicinoid or capsicum extract at less than a taste recognition threshold, wherein

the components (a) and (b) exhibit a sweetness having a sweetness intensity of X2, and 0.1 < X1 < X2 is satisfied, the high-intensity sweetener includes a high-intensity sweetener selected from Reb A, Reb D, Reb M, Mog V, luo han guo extract, sucralose, Ace K, and combinations thereof, preferably a high-intensity sweetener selected from Reb A, Reb D, Reb M, Mog V, luo han guo extract, and combinations thereof, more preferably a high-intensity sweetener selected from Reb D, Reb M, and combinations thereof, and X2 is from 0.5 to 9.0, preferably from 1.0 to 8.0, and more preferably from 2.0 to 6.0.

In the present aspect, the amount of the high-intensity sweetener may be from about 20 to about 600 ppm, from about 30 to about 550 ppm, from about 55 to about 490 ppm, from about 20 to about 200 ppm, from about 100 to about 500 ppm, or from about 150 to about 350 ppm.

In one aspect of the present invention, there is provided an oral composition comprising:

(a) a high-intensity sweetener in an amount corresponding to a sweetness intensity of X1;
(b) a capsaicinoid or capsicum extract at less than a taste recognition threshold; and
(c) sodium at from 0.5 mM to 160 mM, wherein

the components (a) and (b) exhibit a sweetness having a sweetness intensity of X2, the components (a) to (c) exhibit a sweetness having a sweetness intensity of X3, and 0.1 < X1 < X2 < X3 is satisfied, the high-intensity sweetener includes a high-intensity sweetener selected from Reb A, Reb D, Reb M, Mog V, luo han guo extract, sucralose, Ace K, and combinations thereof, preferably a high-intensity sweetener selected from Reb A, Reb D, Reb M, Mog V, luo han guo extract, and combinations thereof, more preferably a high-intensity sweetener selected from Reb D, Reb M, and combinations thereof, and X2 is from 0.5 to 9.0, preferably from 1.0 to 8.0, and more preferably from 2.0 to 6.0.

In the present aspect, the amount of the high-intensity sweetener may be from about 20 to about 600 ppm, from about 30 to about 550 ppm, from about 55 to about 490 ppm, from about 20 to about 200 ppm, from about 100 to about 500 ppm, or from about 150 to about 350 ppm.

In one aspect of the present invention, there is provided an oral composition comprising:

(a) a high-intensity sweetener at from about 20 to about 600 ppm; and
(b) a capsaicinoid at from about 0.0009 to 0.3 ppm.

In one aspect of the present invention, there is provided an oral composition comprising:

(a) a high-intensity sweetener at from about 20 to about 600 ppm;
(b) a capsaicinoid at from about 0.0009 to 0.3 ppm; and
(c) sodium at from 0.5 mM to 160 mM.

2. Method for producing oral composition

In a second aspect, the present invention provides a method for producing the oral composition according to the present invention (hereinafter, referred to as "the production method of the present invention").

A method for producing the oral composition according to the present invention, the method comprising:

(a) adding a high-intensity sweetener, as a raw material of the oral composition, in an amount corresponding to a sweetness intensity of X1; and
(b) adding a capsaicinoid or capsicum extract at less than a taste recognition threshold.

In the method of the present invention, any of the above (a) to (b) may be carried out first, or they may be carried out simultaneously.

The oral composition produced by the method of the present invention is the oral composition of the present invention described in the above section "1. Oral composition with increased sweetness exhibited by high-intensity sweetener". The "raw material" in the method of the present invention may be each material or a mixture thereof necessary for producing an oral composition, and may further contain additional components (optional components) such as a preservative, a flavoring, a carrier, and a fruit juice. The "raw material" may be composed of a plurality of materials.

In the step (a), the high-intensity sweetener is added to the raw materials in an amount corresponding to the sweetness intensity of X1, but it is not necessary to add the high-intensity sweetener in an amount corresponding to the sweetness intensity of X1 at a time, and it may be added in several portions.

When the capsaicinoid or the like at less than the taste recognition threshold is added in the step (b), it is not necessary to add the capsaicinoid or the like at less than the taste recognition threshold at a time, and it may be added in several portions.

As used herein, "addition" refers not only to an operation of actually adding any of the components (a) high-intensity sweeteners in an amount corresponding to the sweetness intensity of X1 and (b) capsaicinoid or capsicum extract at less than the taste recognition threshold to raw materials, but also to an operation of adjusting the amounts of the components (a) and (b) to predetermined amounts in the oral composition finally produced through the production process of the oral composition of the present invention.

For example, first raw materials comprise a fruit juice, grains, or an extract thereof and thus the raw materials comprise any one of the components (a) and (b) in advance. Second raw material to be mixed with the first raw materials also the components (a) and (b). In a case where the oral composition of the present invention can be produced by mixing the first raw materials and the second raw materials, there is no operation of separately adding the components (a) and (b) to raw materials. However, in the method of the present invention, the steps (a) and (b) are considered to have been performed as long as the finally produced oral composition of the present invention contains (a) the high-intensity sweetener in an amount corresponding to the sweetness intensity of X1 and (b) the capsaicinoid or capsicum extract at less than the taste recognition threshold.

The same applies to the following aspects of the production method of the present invention.

In one aspect, the production method of the present invention provides a method for producing the oral composition according to the aspect A (also referred to a production method according to the aspect A), the method comprising:

(a) adding a high-intensity sweetener, as a raw material of the oral composition, in an amount corresponding to a sweetness intensity of X1;
(b) adding a capsaicinoid or capsicum extract, as a raw material of the oral composition, at less than a taste recognition threshold; and
(c) adding 160 mM or less of sodium, as a raw material of the oral composition.

In the method of the present invention, any one of the above (a) to (c) may be performed first, or any two or more thereof may be performed simultaneously.

In one aspect, the production method of the present invention provides a method for producing the oral composition according to the aspect B (also referred to a production method according to the aspect B), the method comprising:

(a) adding a high-intensity sweetener, as a raw material of the oral composition, in an amount corresponding to a sweetness intensity of X1;
(b) adding a capsaicinoid or capsicum extract, as a raw material of the oral composition, at less than a taste recognition threshold; and
(d) adding a low-intensity sweetener, as a raw material of the oral composition, in an amount corresponding to a sweetness intensity of X4.

Any one of the above (a), (b) and (d) may be carried out first, or any two or more thereof may be carried out simultaneously.

In one aspect, the production method of the present invention provides a method for producing the oral composition according to the aspect C (also referred to a production method according to the aspect C), the method comprising:

(a) adding a high-intensity sweetener, as a raw material of the oral composition, in an amount corresponding to a sweetness intensity of X1;
(b) adding a capsaicinoid or capsicum extract, as a raw material of the oral composition, at less than a taste recognition threshold;
(c) adding 160 mM or less of sodium, as a raw material of the oral composition; and
(d) adding a low-intensity sweetener, as a raw material of the oral composition, in an amount corresponding to a sweetness intensity of X4.

Any one of the above (a) to (d) may be carried out first, or any two or more thereof may be carried out simultaneously.

In the method of the present invention, the "oral composition", "sweetness intensity of X1", "high-intensity sweetener", "sweetness intensity of X2", the amount of sodium, the form of sodium in the oral composition, "capsaicinoid or capsicum extract", "low-intensity sweetener", "sweetness intensity of X4", and the like are the same as the definitions described in the section of Oral composition described above, and the numerical values thereof are the same as the numerical values described in the section of Oral composition described above.

3. Method for enhancing sweetness of oral composition

The present invention provides, as a third aspect, a method for enhancing a sweetness of the oral composition (hereinafter, referred to as "the sweetness enhancement method of the present invention").

One aspect of the sweetness enhancement method of the present invention relates to a method for enhancing a sweetness of an oral composition, the sweetness being imparted by a high-intensity sweetener, the method comprising, in production of the oral composition:

(a) adding a high-intensity sweetener, as a raw material, at a taste recognition threshold or more; and
(b) adding a capsaicinoid or capsicum extract, as a raw material, at less than the taste recognition threshold.

Another aspect of the sweetness enhancement method of the present invention relates to a method for enhancing a sweetness of an oral composition, the method comprising adding a capsaicinoid or capsicum extract at less than a taste recognition threshold to an oral composition comprising a high-intensity sweetener at the taste recognition threshold or more.

According to the sweetness enhancement method of the present invention, it is possible to enhance the sweetness of an oral composition and provide the oral composition exhibiting a sweetness exceeding a sweetness intensity obtained by simply adding the component (a) high-intensity sweetener at the taste recognition threshold or more, to the oral composition. Specifically, a capsaicinoid or capsicum extract is added to an oral composition containing a high-intensity sweetener at a taste recognition threshold or more in such a manner that the oral composition contains the capsaicinoid or capsicum extract at less than the taste recognition threshold after the addition. In this way, the oral composition is provided with a sweetness having a sweetness intensity exceeding the sweetness intensity obtained when only the high-intensity sweetener at the taste recognition threshold or more is added. Here, the high-intensity sweetener does not need to be contained in the oral composition before the addition of the capsaicinoid or the capsicum extract, and may be added to the oral composition simultaneously with the capsaicinoid or the capsicum extract, or may be added to the oral composition after the addition of the capsaicinoid or the capsicum extract. The amount of the capsaicinoid or capsicum extract to be added can be selected from the amounts described in the above section "1. Oral composition with increased sweetness exhibited by high-intensity sweetener".

In one aspect, the sweetness enhancement method of the present invention provides a method for enhancing a sweetness of an oral composition, the sweetness being imparted by a high-intensity sweetener (also referred to the sweetness enhancement method of the aspect A), the method comprising, in production of the oral composition, as raw material:

(a) adding a high-intensity sweetener at a taste recognition threshold or more;
(b) adding a capsaicinoid or capsicum extract ay less than the taste recognition threshold; and
(c) adding 160 mM or less of sodium.

In one aspect, the sweetness enhancement method of the present invention provides a method for enhancing a sweetness of an oral composition, the sweetness being imparted by a high-intensity sweetener and a low-intensity sweetener (also referred to the sweetness enhancement method of the aspect B), the method comprising, in production of the oral composition:

(a) adding a high-intensity sweetener, as a raw material, at a taste recognition threshold or more;
(b) adding a capsaicinoid or capsicum extract, as a raw material, at less than the taste recognition threshold; and
(d) adding a low-intensity sweetener, as a raw material, at the taste recognition threshold or more.

In one aspect, the sweetness enhancement method of the present invention provides a method for enhancing a sweetness of an oral composition, the sweetness being imparted by a high-intensity sweetener and a low-intensity sweetener (also referred to the sweetness enhancement method of the aspect C), the method comprising, in production of the oral composition:

(a) adding a high-intensity sweetener, as a raw material, at a taste recognition threshold or more;
(b) adding a capsaicinoid or capsicum extract, as a raw material, at less than the taste recognition threshold;
(c) adding 160 mM or less of sodium, as a raw material; and

(d) adding a low-intensity sweetener, as a raw material, at the taste recognition threshold or more.

In the sweetness enhancement method of the present invention, the "oral composition", the "high-intensity sweetener", the amount of sodium, the form of sodium in the oral composition, the "capsaicinoid or capsicum extract", the "low-intensity sweetener", and the like are the same as the definitions described in the section of Oral composition, and the numerical values thereof are the same as the numerical values described in the section of Oral composition.

## 4. Concentrate for providing oral composition

In a fourth aspect, the present invention provides a concentrate for providing the following oral composition (hereinafter, referred to as "the concentrate of the present invention").
An oral composition comprising:

(a) a high-intensity sweetener in an amount corresponding to a sweetness intensity of X1; and
(b) a capsaicinoid or capsicum extract at less than a taste recognition threshold, wherein

the components (a) and (b) exhibit a sweetness having a sweetness intensity of X2, and $0.1 < X1 < X2$ is satisfied.
The concentrate according to the present invention is used to provide an oral composition by diluting the concentrate at any ratio. The "oral composition" is the same as that described for "1. Oral composition with increased sweetness exhibited by high-intensity sweetener". For example, the concentrate of the present invention can be used as a syrup or stock solution in a beverage or the like. In this case, the concentrate can be used after being diluted n times (for example, 2 times, 3 times, 4 times, 5 times, 6 times, 7 times, 8 times, 9 times, or 10 times). Thus, the concentrate of the present invention comprises n times the concentration of the components comprised in the oral composition of the present invention. In addition, the concentrate of the present invention is concentrated, and thus is preferable in terms of storability and transportability. The concentrate of the present invention may be solid or liquid.
The concentrate of the present invention may be, for example, a 1.5- to 20-fold concentrate of the oral composition of the present invention, typically a 2- to 10-fold concentrate, preferably a 3- to 9-fold concentrate, more preferably a 4- to 8-fold concentrate, and even more preferably a 5- to 7-fold concentrate.
The concentrate according to one aspect of the present invention is an n-fold concentrate of the oral composition of the present invention, the concentrate comprising:

(a) a high-intensity sweetener in an amount corresponding to a sweetness intensity of $X1 \times n$; and
(b) a capsaicinoid or capsicum extract at less than n times a taste recognition threshold, wherein

the components (a) and (b) exhibit a sweetness having a sweetness intensity of $X2 \times n$, $0.1 < X1 < X2$ is satisfied, and $1 < n \leq 20$ is satisfied. n may be from 1.5 to 20, from 2 to 10, from 3 to 9, from 4 to 8, from 5 to 7, or the like.
A concentrate according to another aspect of the present invention is an n-fold concentrate of the oral composition of the aspect A of the present invention, the concentrate comprising:

(a) a high-intensity sweetener in an amount corresponding to a sweetness intensity of $X1 \times n$;
(b) a capsaicinoid or capsicum extract at less than n times a taste recognition threshold; and
(c) sodium at $160 \times n$ mM or less, wherein

the components (a) and (b) exhibit a sweetness having a sweetness intensity of $X2 \times n$, the components (a) to (c) exhibit a sweetness having a sweetness intensity of $X3 \times n$, $0.1 < X1 < X2 < X3$ is satisfied, and $1 < n \leq 20$ is satisfied. n may be from 1.5 to 20, from 2 to 10, from 3 to 9, from 4 to 8, from 5 to 7, or the like.
A concentrate according to another aspect of the present invention is an n-fold concentrate of the oral composition of the aspect B of the present invention, the concentrate comprising:

(a) a high-intensity sweetener in an amount corresponding to a sweetness intensity of $X1 \times n$;
(b) a capsaicinoid or capsicum extract at less than n times a taste recognition threshold; and
(d) a low-intensity sweetener in an amount corresponding to a sweetness intensity of $X4 \times n$, wherein

the components (a), (b), and (d) exhibit a sweetness having a sweetness intensity of $X5 \times n$, $0.1 < X1 + X4 < X5$ is satisfied, and $1 < n \leq 20$ is satisfied. n may be 1.5 to 20, 2 to 10, 3 to 9, 4 to 8, 5 to 7, or the like.
A concentrate according to one aspect of the present invention is an n-fold concentrate of the oral composition according to the aspect C of the present invention, the concentrate comprising:

(a) a high-intensity sweetener in an amount corresponding to a sweetness intensity of X1 × n;

(b) a capsaicinoid or capsicum extract at less than n times a taste recognition threshold;

(c) sodium at 160 × n mM or less; and

(d) a low-intensity sweetener in an amount corresponding to a sweetness intensity of X4 × n, wherein

the components (a), (b), and (d) exhibit a sweetness having a sweetness intensity of X5 × n, the components (a) to (d) exhibit a sweetness having a sweetness intensity of X6 × n, $0.1 < X1 + X4 < X5 < X6$ is satisfied, and $1 < n \leq 20$ is satisfied. n may be from 1.5 to 20, from 2 to 10, from 3 to 9, from 4 to 8, from 5 to 7, or the like.

In the concentrates of the present invention, "oral composition", "sweetness intensity of X1", "high-intensity sweetener", "sweetness intensity of X2", the amount of sodium, the form of sodium in the oral composition, "capsaicinoid or capsicum extract", "sweetness intensity of X3", "low-intensity sweetener", "sweetness intensity of X4", "sweetness intensity of X5", "sweetness intensity of X6", and the like have the same definitions as described in the section of Oral composition described above, and the numerical values thereof are the same as those described in the section of Oral composition described above.

Examples

Hereinafter, the present invention will be specifically described by illustrating examples, but the present invention is not limited to the following examples.

[Example 1] Evaluation of sweetness increasing effect by capsaicinoid (1)

To evaluate a sweetness increasing effect when the capsaicinoid was added to a sweet beverage, sensory evaluation was performed on test beverages having the compositions shown in Table 2. Each test beverage was prepared by dissolving sucrose (special granulated sugar), glucose, Reb D (95% or more pure), and the capsaicinoid (a capsicum extract containing 3 mM of capsaicin, dihydrocapsaicin, and nordihydrocapsaicin in total) in pure water at the concentrations shown in Table 2 (the concentration of the capsaicinoid is shown as the total concentration of capsaicin, dihydrocapsaicin and nordihydrocapsaicin (the same applies to the following examples)). A beverage containing no capsaicinoid was used as a control beverage. Note that unless otherwise specified, the same components as described above were used in the following Examples. Brix was calculated from the concentrations of sucrose and glucose with the energy (kcal/100 mL) derived from Reb D and the capsicum extract as 0 (kcal/100 mL) (the same applies to the following Examples). Persons (five persons) trained on sensory perception served as panelists, and after whether a beverage was the test beverage or the control beverage was masked, sensory evaluation was carried out by a three-alternative forced choice method in which the panelists were asked to select one of three choices: A: "test beverage is sweeter than control beverage", B: "test beverage and control beverage have the same sweetness degree", and C: "control beverage is sweeter than test beverage". The number of panelists who selected each choice is shown in Table 2.

[Table 2]

| Table 2 Composition of test beverages and sensory test results | | | | |
|---|---|---|---|---|
| | 1-1 | 1-2 | 1-3 | 1-4 |
| Sucrose (w/v%) | 1 | 1 | 1 | 1 |
| Glucose (w/v%) | 3.5 | 3.5 | 3.5 | 3.5 |
| Reb D (ppm) | 208 | 208 | 208 | 208 |
| Capsaicinoid (μM) | 0.01 | 0.03 | 0.1 | 0.3 |
| Brix | 4.5 | 4.5 | 4.5 | 4.5 |
| Energy (kcal/100 ml) | 18 | 18 | 18 | 18 |
| A | 2 | 3 | 4 | 3 |
| B | 0 | 1 | 0 | 1 |
| C | 3 | 1 | 1 | 1 |

At a capsaicinoid concentration of 0.01 μM or more, some panelists felt that the test beverage was sweeter, and at a capsaicinoid concentration exceeding 0.01 μM, more than half of the panelists felt that the test beverage was sweeter.

[Example 2] Measurement of taste recognition threshold of capsaicinoid

The taste recognition threshold of the capsaicinoid was determined by sensory evaluation of test beverages having the compositions shown in Table 3. Each test beverage was prepared by dissolving sucrose, glucose, Reb D, the capsaicinoid, and sodium (sodium gluconate, the same in the following Examples) in pure water at the concentrations shown in Table 3. Persons (five persons) trained on sensory perception served as panelists, sensory evaluation was carried out by a four-alternative forced choice method in which the panelists were asked to select one of four choices: A: "not feel anything other than sweetness", B: "not feel pungency but feel taste other than sweetness", C: "feel pungency", and D: "strongly feel pungency", as feeling on the tongue or in the back of throat. The number of panelists who selected each choice is shown in Table 3.

[Table 3]

| Table 3 Compositions of test beverages and sensory test results | | | | | | | | | | | |
|---|---|---|---|---|---|---|---|---|---|---|---|
| | | 2-1 | 2-2 | 2-3 | 2-4 | 2-5 | 2-6 | 2-7 | 2-8 | 2-9 | 2-10 |
| Sucrose (w/v%) | | 1 | 1 | 1 | 1 | 1 | 1 | 1 | 1 | 1 | 1 |
| Glucose (w/v%) | | 3.5 | 3.5 | 3.5 | 3.5 | 3.5 | 3.5 | 3.5 | 3.5 | 3.5 | 3.5 |
| Reb D (ppm) | | 208 | 208 | 208 | 208 | 208 | 208 | 208 | 208 | 208 | 208 |
| Sodium (mM) | | 5 | 5 | 5 | 5 | 5 | 5 | 5 | 5 | 5 | 5 |
| Capsaicinoid ($\mu$M) | | 0 | 0.0001 | 0.0003 | 0.001 | 0.003 | 0.01 | 0.03 | 0.1 | 0.3 | 1 |
| On the tongue | A | 5 | 5 | 4 | 4 | 5 | 5 | 3 | 3 | 0 | 0 |
| | B | 0 | 0 | 1 | 1 | 0 | 0 | 1 | 0 | 2 | 0 |
| | C | 0 | 0 | 0 | 0 | 0 | 0 | 1 | 2 | 2 | 2 |
| | D | 0 | 0 | 0 | 0 | 0 | 0 | 0 | 0 | 1 | 3 |
| Back of throat | A | 5 | 5 | 5 | 5 | 5 | 5 | 3 | 2 | 0 | 0 |
| | B | 0 | 0 | 0 | 0 | 0 | 0 | 1 | 2 | 2 | 0 |
| | C | 0 | 0 | 0 | 0 | 0 | 0 | 1 | 1 | 2 | 0 |
| | D | 0 | 0 | 0 | 0 | 0 | 0 | 0 | 0 | 1 | 5 |

From the above results, the taste detection threshold and the taste recognition threshold were determined to be about 0.1 $\mu$M and about 0.3 $\mu$M, respectively, as the concentration of the capsaicinoid.

[Example 3] Evaluation of sweetness increasing effect by capsaicinoid and sodium (1)

To evaluate the sweetness increasing effect when the capsaicinoid and sodium were added to a sweet beverage, sensory evaluation was performed on test beverages having the compositions shown in Table 4. Each test beverage was prepared by dissolving sucrose, glucose, Reb D, sodium, and the capsaicinoid in pure water at the concentrations shown in Table 4. A beverage containing no capsaicinoid was used as a control beverage. Persons (four to five persons) trained on sensory perception served as panelists, and after whether a beverage was the test beverage or the control beverage was masked, sensory evaluation was performed by a three-alternative forced choice method in which the panelists were asked to select one of three choices: A: "test beverage is sweeter than control beverage", B: "test beverage and control beverage have the same sweetness degree", and C: "control beverage is sweeter than test beverage". The number of trials of the sensory evaluation (total number of panelists) varied depending on the test beverages, and was from 5 to 13 (persons). The proportion of panelists who selected each choice is shown in Table 4.

[Table 4]

| Table 4 Compositions of test beverages and sensory test results | | | | | | | | | |
|---|---|---|---|---|---|---|---|---|---|
| | 3-1 | 3-2 | 3-3 | 3-4 | 3-5 | 3-6 | 3-7 | 3-8 | 3-9 |
| Sucrose (w/v%) | 1 | 1 | 1 | 1 | 1 | 1 | 1 | 1 | 1 |
| Glucose (w/v%) | 3.5 | 3.5 | 3.5 | 3.5 | 3.5 | 3.5 | 3.5 | 3.5 | 3.5 |
| Reb D (ppm) | 208 | 208 | 208 | 208 | 208 | 208 | 208 | 208 | 208 |
| Sodium (mM) | 5 | 5 | 5 | 5 | 5 | 5 | 5 | 5 | 5 |
| Capsaicinoid ($\mu$M) | 0.0001 | 0.0003 | 0.001 | 0.003 | 0.01 | 0.03 | 0.1 | 0.3 | 1 |
| Brix | 4.5 | 4.5 | 4.5 | 4.5 | 4.5 | 4.5 | 4.5 | 4.5 | 4.5 |
| Energy (kcal/100 mL) | 18 | 18 | 18 | 18 | 18 | 18 | 18 | 18 | 18 |
| Number of trials | 9 | 9 | 9 | 13 | 9 | 9 | 9 | 5 | 5 |
| A | 0.11 | 0.22 | 0.11 | 0.46 | 0.67 | 0.56 | 0.56 | 0.80 | 0.40 |
| B | 0.67 | 0.67 | 0.44 | 0.38 | 0.11 | 0.11 | 0.11 | 0.20 | 0.20 |
| c | 0.22 | 0.11 | 0.44 | 0.15 | 0.22 | 0.33 | 0.33 | 0.00 | 0.40 |

There were panelists that felt that the test beverage was sweeter at a capsaicinoid concentration of 0.0001 $\mu$M or more, the number of panelists that felt that the test beverage was sweeter at a capsaicinoid concentration of 0.003 $\mu$M or more rapidly increased, and more than half of the panelists felt that the test beverage was sweeter at a capsaicinoid concentration of 0.01 $\mu$M to 0.3 $\mu$M.

[Example 4] Evaluation of sweetness increasing effect by capsaicinoid and sodium (2)

To further evaluate the sweetness increasing effect when the capsaicinoid and sodium were added to a sweet beverage by focusing on the sodium concentration, sensory evaluation was performed on test beverages having the compositions shown in Table 5. Each test beverage was prepared by dissolving sucrose, glucose, Reb D, sodium, and the capsaicinoid in pure water at the concentrations shown in Table 5. A beverage containing no capsaicinoid was used as a control beverage. Persons (one to five persons) trained on sensory perception served as panelists, and after whether a beverage was the test beverage or the control beverage was masked, sensory evaluation was performed by a three-alternative forced choice method in which the panelists were asked to select one of three choices: A: "test beverage is sweeter than control beverage", B: "test beverage and control beverage have the same sweetness degree", and C: "control beverage is sweeter than test beverage". The number of trials of the sensory evaluation (total number of panelists) varied depending on the test beverage, and was from 4 to 10 (persons). The proportion of panelists who selected each choice is shown in Table 5.

[Table 5]

| Table 5 Compositions of test beverages and sensory test results | | | | | | | | | | |
|---|---|---|---|---|---|---|---|---|---|---|
| | 4-1 | 4-2 | 4-3 | 4-4 | 4-5 | 4-6 | 4-7 | 4-8 | 4-9 | 4-10 |
| Sucrose (w/v%) | 1 | 1 | 1 | 1 | 1 | 1 | 1 | 1 | 1 | 1 |
| Glucose (w/v%) | 3.5 | 3.5 | 3.5 | 3.5 | 3.5 | 3.5 | 3.5 | 3.5 | 3.5 | 3.5 |
| Reb D (ppm) | 208 | 208 | 208 | 208 | 208 | 208 | 208 | 208 | 208 | 208 |
| Sodium (mM) | 1 | 2.5 | 5 | 7.5 | 10 | 15 | 20 | 40 | 80 | 160 |
| Capsaicinoid ($\mu$M) | 0.01 | 0.01 | 0.01 | 0.01 | 0.01 | 0.01 | 0.01 | 0.01 | 0.01 | 0.01 |
| Brix | 4.5 | 4.5 | 4.5 | 4.5 | 4.5 | 4.5 | 4.5 | 4.5 | 4.5 | 4.5 |
| Energy (kcal/100 mL) | 18 | 18 | 18 | 18 | 18 | 18 | 18 | 18 | 18 | 18 |
| Number of trials | 6 | 6 | 9 | 10 | 6 | 5 | 5 | 5 | 4 | 4 |
| A | 0.67 | 0.83 | 0.67 | 0.50 | 0.83 | 0.80 | 0.60 | 0.60 | 0.25 | 0.25 |

(continued)

| Table 5 Compositions of test beverages and sensory test results | | | | | | | | | | |
|---|---|---|---|---|---|---|---|---|---|---|
| | 4-1 | 4-2 | 4-3 | 4-4 | 4-5 | 4-6 | 4-7 | 4-8 | 4-9 | 4-10 |
| B | 0.17 | 0 | 0.11 | 0.10 | 0 | 0 | 0 | 0.40 | 0.25 | 0.25 |
| C | 0.17 | 0.17 | 0.22 | 0.40 | 0.17 | 0.20 | 0.40 | 0 | 0.50 | 0.50 |

Some panelists felt that the test beverage was sweeter at all tested sodium concentrations, and at least half of the panelists felt that the test beverage was sweeter at a sodium concentration of 1 mM or more and less than 80 mM.

[Example 5] Quantification of sweetness increasing effect by capsaicinoid and/or sodium

To quantify the sweetness increasing effect of the capsaicinoid and/or sodium, the sweetness intensity of each of the beverages having the compositions shown in Table 6 was measured by a visual analogue scale (VAS) method. Each beverage was prepared by dissolving components selected from sucrose, glucose, Reb D, sodium, and the capsaicinoid in pure water at the concentrations shown in Table 6. Beverage 5-1 was used as a control beverage serving as a reference for sweetness intensity, and beverages 5-2 to 5-4 were used as test beverages. In the VAS method, persons (5 persons) trained on sensory perception served as panelists, on a line segment on which the left end was defined as "not sweet at all", the right end was defined as "cannot consider anything sweeter than this", and the intensity of sweetness of the control beverage was plotted roughly at the center, the intensity of sweetness felt for the test beverage was plotted, and the distance from the left end was used as an indicator of sweetness intensity. Table 6 shows the sweetness intensity of the test beverage when the sweetness intensity of the control beverage is 8 and the ratio of the sweetness intensity of the test beverage to the sweetness intensity of the control beverage.

[Table 6]

| Table 6 Compositions of beverages and sensory test results | | | | |
|---|---|---|---|---|
| | 5-1 | 5-2 | 5-3 | 5-4 |
| Sucrose (w/v%) | 1 | 1 | 1 | 1 |
| Glucose (w/v%) | 3.5 | 3.5 | 3.5 | 3.5 |
| Reb D (ppm) | 208 | 208 | 208 | 208 |
| Sodium (mM) | 0 | 0 | 5 | 5 |
| Capsaicinoid ($\mu$M) | 0 | 0.03 | 0 | 0.03 |
| Brix | 4.5 | 4.5 | 4.5 | 4.5 |
| Energy (kcal/100 ml) | 18 | 18 | 18 | 18 |
| Sweetness intensity | 8.00 | 9.08 | 9.03 | 9.93 |
| Magnification | 1 | 1.135 | 1.128 | 1.241 |

The sweetness intensity became Beverage 5-3 < Beverage 5-2 < Beverage 5-4, and the sweetness intensity of the sweet beverage was increased about 1.14 times by adding the capsaicinoid, and the sweetness intensity was increased about 1.24 times by adding the capsaicinoid and sodium.

[Example 6] Evaluation of sweetness increasing effect by capsaicinoid and/or sodium

To evaluate the sweetness increasing effect of the capsaicinoid and/or sodium on various high-intensity sweeteners, sensory evaluation was performed on test beverages having the compositions shown in Tables 7 and 8. Each test beverage was prepared by dissolving components selected from sucrose, glucose, Reb A (99% pure), Reb D, Reb M (94% pure or more), luo han guo extract (containing 40 wt.% of Mog V), Mog V (98% pure or more), Ace K, sucralose, sodium, and the capsaicinoid in pure water at the concentrations shown in Tables 7 and 8. A beverage containing no capsaicinoid was used as a control beverage. Persons (three to four persons) trained on sensory perception served as panelists, and after whether a beverage was the test beverage or the control beverage was masked, sensory evaluation was performed by a three-alternative forced choice method in which the panelists were asked to select one of three choices: A: "test beverage is sweeter than control beverage", B: "test beverage and control beverage have the same sweetness degree", and C: "control beverage is sweeter than test beverage". The number of trials of the sensory evaluation (total number of panelists) varied depending on the test beverage, and was 3 to 8 (persons). The proportion of panelists who selected each choice is shown in Tables 7 and 8.

[Table 7]

| Table 7 Compositions of test beverages and sensory test results | | | | | | | | |
|---|---|---|---|---|---|---|---|---|
| | 6-1 | 6-2 | 6-3 | 6-4 | 6-5 | 6-6 | 6-7 | 6-8 |
| Sucrose (w/v%) | 1 | 1 | 1 | 1 | 0 | 0 | 0 | 0 |
| Glucose (w/v%) | 3.5 | 3.5 | 3.5 | 3.5 | 0 | 0 | 0 | 0 |
| Reb A (ppm) | 208 | 208 | 0 | 0 | 355 | 355 | 0 | 0 |
| Reb D (ppm) | 0 | 0 | 0 | 0 | 0 | 0 | 355 | 355 |
| Reb M (ppm) | 0 | 0 | 208 | 208 | 0 | 0 | 0 | 0 |
| Sodium (mM) | 0 | 5 | 0 | 5 | 0 | 5 | 0 | 5 |
| Capsaicinoid ($\mu$M) | 0.01 | 0.01 | 0.01 | 0.01 | 0.01 | 0.01 | 0.01 | 0.01 |
| Brix | 4.5 | 4.5 | 4.5 | 4.5 | 0 | 0 | 0 | 0 |
| Energy (kcal/100 ml) | 18 | 18 | 18 | 18 | 0 | 0 | 0 | 0 |
| Number of trials | 4 | 4 | 3 | 3 | 4 | 4 | 8 | 8 |
| A | 0.75 | 0.75 | 0.67 | 0.67 | 0.5 | 0.5 | 0.25 | 0.625 |
| B | 0 | 0.25 | 0 | 0 | 0.25 | 0.25 | 0.375 | 0 |
| C | 0.25 | 0 | 0.33 | 0.33 | 0.25 | 0.25 | 0.375 | 0.375 |

[Table 8]

| Table 8 Compositions of test beverages and sensory test results | | | | | | | | |
|---|---|---|---|---|---|---|---|---|
| | 6-9 | 6-10 | 6-11 | 6-12 | 6-13 | 6-14 | 6-15 | 6-16 |
| Sucrose (w/v%) | 1 | 1 | 1 | 1 | 0 | 0 | 0 | 0 |
| Glucose (w/v%) | 3.5 | 3.5 | 3.5 | 3.5 | 0 | 0 | 0 | 0 |
| Luo han guo extract (ppm) | 208 | 208 | 0 | 0 | 0 | 0 | 0 | 0 |
| Mog V (ppm) | 0 | 0 | 208 | 208 | 0 | 0 | 0 | 0 |
| Ace K (w/v%) | 0 | 0 | 0 | 0 | 0.04 | 0.04 | 0 | 0 |
| Sucralose (w/v%) | 0 | 0 | 0 | 0 | 0 | 0 | 0.013 | 0.013 |
| Sodium (mM) | 0 | 5 | 0 | 5 | 0 | 5 | 0 | 5 |
| Capsaicinoid ($\mu$M) | 0.01 | 0.01 | 0.01 | 0.01 | 0.01 | 0.01 | 0.01 | 0.01 |
| Brix | 4.5 | 4.5 | 4.5 | 4.5 | 0 | 0 | 0 | 0 |
| Energy (kcal/100 ml) | 18 | 18 | 18 | 18 | 0 | 0 | 0 | 0 |
| Number of trials | 3 | 3 | 4 | 4 | 4 | 4 | 4 | 4 |
| A | 0.67 | 0.67 | 1 | 0.75 | 0.25 | 0.75 | 0.25 | 0.5 |
| B | 0.33 | 0.33 | 0 | 0 | 0.25 | 0 | 0.25 | 0.25 |
| C | 0 | 0 | 0 | 0.25 | 0.5 | 0.25 | 0.5 | 0.25 |

[Example 7] Composition of capsaicinoid

Components contained in the capsaicinoid (capsicum extract) used in Examples 1 to 6 were analyzed. The capsaicinoid contained capsaicin 720 mg/L (2.36 mM), dihydrocapsaicin 230 mg/L (0.75 mM), and nordihydrocapsaicin 17 mg/L (0.06 mM) (total 967 mg/L (3.17 mM)).

**Claims**

1. An oral composition comprising:

    (a) a high-intensity sweetener in an amount corresponding to a sweetness intensity of X1; and
    (b) a capsaicinoid or capsicum extract at less than a taste recognition threshold, wherein

    the components (a) and (b) exhibit a sweetness having a sweetness intensity of X2, and $0.1 < X1 < X2$ is satisfied.

2. The oral composition according to claim 1, further comprising (c) sodium at from 0.5 mM to 160 mM, wherein the components (a) to (c) exhibit a sweetness having a sweetness intensity of X3, and $0.1 < X1 < X2 < X3$ is satisfied.

3. The oral composition according to claim 1 or 2, wherein the high-intensity sweetener includes a high-intensity sweetener selected from rebaudioside A, rebaudioside D, rebaudioside M, mogroside V, luo han guo extract, sucralose, acesulfame K, and combinations thereof.

4. The oral composition according to any one of claims 1 to 3, wherein the capsaicinoid includes a capsaicinoid selected from capsaicin, dihydrocapsaicin, nordihydrocapsaicin, homocapsaicin, homodihydrocapsaicin, and combinations thereof.

5. The oral composition according to any one of claims 1 to 4, further comprising a low-intensity sweetener.

6. The oral composition according to claim 5, wherein the low-intensity sweetener includes a low-intensity sweetener selected from glucose, sucrose, fructose, maltose, isomerized sugar, lactose, psicose, allose, tagatose, xylose, ribose, and combinations thereof.

7. The oral composition according to any one of claims 1 to 6, wherein the oral composition is a beverage.

8. A concentrate of the oral composition described in any one of claims 1 to 7, the concentrate comprising:

    (a) a high-intensity sweetener in an amount corresponding to a sweetness intensity of $X1 \times n$; and
    (b) a capsaicinoid or capsicum extract at less than n times a taste recognition threshold, wherein

    the components (a) and (b) exhibit a sweetness having a sweetness intensity of $X2 \times n$, $0.1 < X1 < X2$ is satisfied, and n is from 2 to 20.

9. The concentrate of the oral composition according to claim 2, the concentrate further comprising (c) sodium at from $0.5 \times n$ mM to $160 \times n$ mM, wherein the components (a) to (c) exhibit a sweetness having a sweetness intensity of $X3 \times n$, and $0.1 < X1 < X2 < X3$ is satisfied.

10. A method for producing the oral composition described in any one of claims 1 to 7, the method comprising:

    (a) adding a high-intensity sweetener, as a raw material, in an amount corresponding to a sweetness intensity of X1; and
    (b) adding a capsaicinoid or capsicum extract, as a raw material, at less than a taste recognition threshold.

11. The method according to claim 10, further comprising,
    (c) adding from 0.5 mM to 160 mM of sodium, as a raw material.

12. A method for enhancing a sweetness of an oral composition, the sweetness being imparted by a high-intensity sweetener, the method comprising, in production of the oral composition:

(a) adding the high-intensity sweetener, as a raw material, at a taste recognition threshold or more; and
(b) adding a capsaicinoid or capsicum extract, as a raw material, at less than the taste recognition threshold.

13. The method according to claim 12, further comprising, in the production of the oral composition,
(c) adding from 0.5 mM to 160 mM of sodium, as a raw material.

14. An oral composition comprising:

(a) a high-intensity sweetener at from about 20 to about 600 ppm; and
(b) capsaicinoid at from about 0.0009 to 0.3 ppm.

15. The oral composition according to claim 14, further comprising (c) sodium at from 0.5 mM to 160 mM.

## INTERNATIONAL SEARCH REPORT

| International application No. |
| --- |
| **PCT/JP2022/048632** |

**A.    CLASSIFICATION OF SUBJECT MATTER**

*A23L 27/00*(2016.01)i; *A23L 27/10*(2016.01)i; *A23L 27/30*(2016.01)i
FI:    A23L27/00 E; A23L27/00 101A; A23L27/00 101Z; A23L27/10 E; A23L27/30 Z

According to International Patent Classification (IPC) or to both national classification and IPC

**B.    FIELDS SEARCHED**

Minimum documentation searched (classification system followed by classification symbols)

A23L27/00; A23L27/10; A23L27/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY/MEDLINE/EMBASE/BIOSIS/FSTA/AGRICOLA (STN)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2003-78307 A (TYCO ELECTRONICS CORP) 14 March 2003 (2003-03-14)<br>claims 1, 4, 6, paragraph [0018], examples 3, 7 | 1-15 |
| A | JP 8-242805 A (SANEI GEN F F I INC) 24 September 1996 (1996-09-24)<br>example 1 | 1-15 |
| A | JP 2019-24331 A (AJINOMOTO KK) 21 February 2019 (2019-02-21)<br>claims 1-17, paragraph [0034], examples 38-43 | 1-15 |
| A | JP 2010-68749 A (T HASEGAWA CO LTD) 02 April 2010 (2010-04-02)<br>claims 1-2, example 1 | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 March 2023** | **20 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/048632**

| Patent document cited in search report | | | Publication date (day/month/year) | Patent family member(s) | | | Publication date (day/month/year) |
|---|---|---|---|---|---|---|---|
| JP | 2003-78307 | A | 14 March 2003 | US | 2003/0030500 | A1 | |
| | | | | EP | 1291958 | A1 | |
| | | | | CN | 1407652 | A | |
| JP | 8-242805 | A | 24 September 1996 | (Family: none) | | | |
| JP | 2019-24331 | A | 21 February 2019 | (Family: none) | | | |
| JP | 2010-68749 | A | 02 April 2010 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018225817 A
- WO 2020116624 A
- WO 2020116626 A
- WO 2020116627 A
- WO 2020116628 A
- WO 2020116633 A
- WO 2020116634 A
- WO 2020116637 A
- WO 2020116638 A
- WO 2020116639 A
- WO 2020116641 A
- JP 2021215257 A

**Non-patent literature cited in the description**

- **ZHAO G. Q. ; ZHANG Y. ; HOON M.A. ; CHANDRASHEKAR J. ; ERLENBACH I. ; RYBA N. J. P. ; ZUKER1 C. S.** *Cell,* 2003, vol. 115, 255-266
- **LI X ; STASZEWSKI L ; XU H ; DURICK K ; ZOLLER M ; ADLER E.** *Proc Natl Acad Sci U S A.,* 2002, vol. 99 (7), 4692-4696
- **FERNSTROM J. D. ; MUNGER S. D. ; SCLAFANI A. ; DE ARAUJO I. E. ; ROBERTS A. ; MOLINARY S.** *J. Nutr.,* 2012, vol. 142, 1134S-1141S
- **TOYODA et al.** Construction of a Screening Test for Gustatory Function in Four Basic Tastes. *Journal of Japanese Society of Stomatognathic Function,* 2014, vol. 20, 115-129
- **ABDURAHMAN et al.** *Aust J Basic & Appl Sci.,* 2016, vol. 10 (10), 263-75
- *Eur J Clin Nutr,* 2004, vol. 58, 629-636
- **YUKI YAMAUCHI et al.** Whole Mouth Method Gustatory Test (First Report) - Fundamental Studies and Principal Component Analysis. *Nippon Jibiinkoka Gakkai Kaiho,* 1995, vol. 98 (1), 119-129
- **REIKO OMORI.** Comparisons of the taste sensitivity between three generations. *Bulletin of the Faculty of Education of Utsunomiya University, Part 1,* 2013, vol. 63, 201-210